(19) Europäisches Patentamt
European Patent Office
Office européen des brevets

(11) EP 1 725 610 B1

(12) EUROPEAN PATENT SPECIFICATION

(45) Date of publication and mention of the grant of the patent:
**09.01.2008 Bulletin 2008/02**

(21) Application number: **05729551.1**

(22) Date of filing: **11.03.2005**

(51) Int Cl.:
***C08K 9/00*** *(2006.01)* ***A01N 59/00*** *(2006.01)*

(86) International application number:
**PCT/US2005/008582**

(87) International publication number:
**WO 2005/087855 (22.09.2005 Gazette 2005/38)**

# (54) BIOCIDAL COMPOSITIONS AND METHODS OF MAKING THEREOF

BIOZID WIRKENDE ZUSAMMENSETZUNGEN UND HERSTELLUNGSVERFAHREN DAFÜR

COMPOSITIONS BIOCIDES ET LEUR PROCEDE D'ELABORATION

(84) Designated Contracting States:
**AT BE BG CH CY CZ DE DK EE ES FI FR GB GR HU IE IS IT LI LT LU MC NL PL PT RO SE SI SK TR**

(30) Priority: **11.03.2004 US 798183**

(43) Date of publication of application:
**29.11.2006 Bulletin 2006/48**

(73) Proprietor: **GENERAL ELECTRIC COMPANY**
**Schenectady, NY 12345 (US)**

(72) Inventors:
- **DEKKERS, Josephus, Hubertus, Cornelius, Maria**
  **NL-4824 LP Breda (NL)**
- **GOOSSENS, Johannes, Martinus, Dina**
  **NL-4624HN (NL)**
- **VAN DE GRAMPEL, Robert, Dirk**
  **NL-4614 GA Bergen op Zoom (NL)**
- **HOEKS, Theodorus, Lambertus**
  **NL-4613 AS Bergen op Zoom (NL)**
- **DE NOOJIER, Hendrik, Cornelus, Jacobus**
  **NL-4336 HK HK Middleburg (NL)**
- **MARIA VAN PEER, Cornelis, Johannes, Gerardus**
  **NL-4613 GG Bergen op Zoom (NL)**
- **SMITH, Gary**
  **Evansville, IN 47725 (US)**

(74) Representative: **Carpintero Lopez, Francisco et al**
**Herrero & Asociados, S.L.**
**C/ Alcala, 35**
**28014 Madrid (ES)**

(56) References cited:
**US-A- 4 775 585**
**US-A- 6 093 422**
**US-B1- 6 365 220**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 725 610 B1

## Description

### BACKGROUND

Inorganic biocidal agents, which comprise biocidal metal ions such as silver, copper and zinc, may be added to materials to impart biocidal properties. Such biocidal agents can reduce the growth of pathogenic organisms such as bacteria and viruses. Silver based materials, such as colloidal silver, silver nitrate, silver sulfate, silver chloride, silver complexes, and zeolites comprising silver ions, are known biocidal agents. One disadvantage of these additives is that relatively high concentrations are required in order to achieve a biocidal effect. When high concentrations of the inorganic biocidal agents are used, the material properties of a plastic may be altered in an undesirable manner (e.g., impact, light transmission, yellowness index, and haze). Moreover, in the case of a pigmented plastic sheet, the color may be affected by the addition of the biocidal additive. Another disadvantage is that zeolite additives are high in cost.

The use of biocidal zeolites in various polymeric compositions has been described. Polymeric articles comprising biocidal zeolites are described in U.S. Patent Nos. 4,775,585 and 4,938,958. WO 01/34686 describes polymeric foams such as polyurethane foams into which biocidal zeolites may be added. WO 01/46900 describes a touch screen for a computer in which a plastic layer including a biocidal zeolite is applied to the touch screen. Coatings comprising a polysaccharide component and a biocidal zeolite are described in WO 02/18003. A sterilized glove having an organic polymer film layer comprising an antibacterial zeolite is described in U.S. Patent No. 5,003,683.

Disadvantages of molded articles comprising biocidal inorganic materials such as zeolites may include both high cost and negative impact on the properties of the plastic. Biocidal zeolite-comprising polymer films having a thickness of no more than 15 micrometers are described in U.S. Patent No. 5,566,699. The films are laminated to a substrate and may be used for packaging materials for food and medical goods.

While the present biocidal plastic compositions and articles are suitable for their intended purpose, there remains a need for additional biocidal articles and methods of making such articles, particularly articles having improved biocidal activity.

### BRIEF SUMMARY

An article comprises a thermoplastic composition comprising a thermoplastic resin and an inorganic biocidal agent, wherein the thermoplastic resin comprises a homopolymer or copolymer of a polycarbonate, a polyester, a polyacrylate, a polyamide, a polyetherimide, a polyphenylene ether, or a combination comprising one or more of the foregoing resins, wherein the article has a biocidal metal release factor of greater than 2.5 from an exterior surface. The biocidal metal release in parts per billion is measured by contacting 5 cm by 5 cm of the exterior surface with 40 milliliters of 0.8% weight/volume of sodium nitrate for 24 hours at 25°C to form a test solution, and measuring the amount of biocidal metal in the test solution in parts per billion. The biocidal metal release factor is the amount of biocidal metal in the test solution in parts per billion divided by a product of a weight percent of the inorganic biocidal agent based on the total weight of the article and the weight percent of biocidal metal in the inorganic biocidal agent.

In another aspect, an article comprises a textured exterior surface covering at least a portion thereof, wherein the textured exterior surface comprises an inorganic biocidal agent and a first thermoplastic resin.

In one aspect, a method of making a textured article comprises chemically or mechanically abrading an exterior surface of an article to form a textured exterior surface, wherein the exterior surface comprises an inorganic biocidal agent and a first thermoplastic resin, and wherein abrading results in an improvement in biocidal activity in the textured article compared to an untextured article.

Another method of making a textured article comprises calendering an article to provide a textured exterior surface over at least a portion of the article, wherein the surface of a roller in contact with the exterior surface of the article comprises surface discontinuities, and wherein the textured exterior surface of the article comprises an inorganic biocidal agent and a first thermoplastic resin.

Yet another method of making a textured article comprises molding an article to provide a textured exterior surface over at least a portion of the article, wherein the surface of a mold in contact with the exterior surface of the article comprises surface discontinuities, and wherein the textured exterior surface of the article comprises an inorganic biocidal agent and a first thermoplastic resin.

A method of making a shaped article, comprises thermoforming an article comprising an exterior surface comprising an inorganic biocidal agent and a first thermoplastic resin to form the shaped article, wherein the shaped article has improved biocidal activity compared to the unshaped article.

### DETAILED DESCRIPTION OF THE PREFERRED EMBODIMENTS

The disclosed articles and multi-layer articles have biocidal activity due to the presence of an inorganic biocidal

agent in the exterior surface of the article or multi-layer article. The articles and multi-layer articles disclosed herein preferably have improved biocidal activity as compared with previously described articles. Preferably, the articles have a biocidal metal release factor from an exterior surface of greater than or equal to about 2.5. Also preferably, the articles are effective to kill at least 50% of a pathogenic organism in contact with the exterior surface over a period of 24 hours at 25°C.

The biocidal properties of the articles exhibit efficacy for the end use applications. In one aspect, the biocidal activity is related to the amount of biocidal metal released from the exterior surface of the article. In another aspect, the degree of anti-microbial efficacy may be determined by one of several tests such as the Dow shaker test, direct inoculation and several others knows to those skilled in the art, and are chosen based upon the end use application.

One measure of the biocidal activity of an article is the biocidal metal (e.g., silver) release from the exterior surface of the article. Biocidal metal release is preferably measured as the amount of biocidal metal released from the exterior surface of a 2 inch by 2 inch sample (0.05 meter by 0.05 meter, or 5 cm by 5 cm). The exterior surface of the sample to be tested is contacted in a sodium nitrate solution (40 mL of 0.8% sodium nitrate) for 24 hours at room temperature (i.e., 25°C) to form a test solution. The test solution is then analyzed to measure the amount of biocidal metal in the test solution in parts per billion (equivalent to $\mu$g/ml), and thus the exposure of the inorganic biocidal agent at the surface of the article. The amount of biocidal metal in the test solution may then be measured using a graphite furnace atomic absorption spectrophotometer. For an article comprising 2.0 percent by weight (wt%) of an inorganic biocidal agent based on the weight of the article or a layer of a multi-layer article, and wherein the inorganic biocidal agent comprises 2.0 wt% of a biocidal metal based on the total weight of the inorganic biocidal agent, the exterior surface has a biocidal metal release of greater than or equal to about 10 parts per billion (ppb), preferably greater than or equal to about 20 ppb, more preferably greater than or equal to about 30 ppb, and most preferably greater than or equal to about 40 ppb.

The biocidal metal release is dependent upon the percentage of the inorganic biocidal agent employed as well as the percentage of biocidal metal in the inorganic biocidal agent. To standardize the amount of biocidal metal release, a release factor is defined below:

$$\text{release factor} = \frac{\text{biocidal metal in test solution in ppb}}{(\text{wt\% inorganic biocidal agent}) * (\text{wt\% biocidal metal})}.$$

The wt% inorganic biocidal agent may be the overall concentration in a single layer article, or the concentration in a surface layer of a multi-layer article. The wt% biocidal metal is the wt% of the biocidal metal in the inorganic biocidal agent. For example, if the silver release is 10 ppb and the article contains 2 wt% of a silver zeolite containing 2 wt% of silver, the release factor is (10)/(2*2) = 2.5. Preferably, the release factor is greater than or equal to about 2.5, more preferably greater than or equal to about 3, and most preferably greater than or equal to about 4.

Another measure of the biocidal activity of the articles and multi-layer articles is an anti-microbial efficacy test. This test is based on Japanese Industrial Standard JIS-2108 Z, which is the basis of ASTM test E2180-01 and the European IBRG antimicrobial assay. Articles may be directly inoculated with about $10^5$ colony forming units/ milliliter (CFU/ml) of an *Escherichia coli (E. coli)* culture and covered with a plastic film to ensure even contact of the culture with the sample surface. The volume of the culture may be, for example, 0.1 to 0.2 ml. Alternatively, samples may be inoculated with about $1.3X10^6$ CFU/ml to about $1.4X10^6$ CFU/ml of *Staphlococcus aureus.* A 0.1 ml culture is contacted with a 50 mm by 50 mm article. In the tests, a control sample not exposed to a biocidal article may be compared to the treated samples as a measure of performance. The samples are placed in an incubator at 37°C for 24 hours, and the remaining bacterial population may be measured by standard microbiological methods. For example, the culture and/or dilutions thereof may be spread on a culture plate suitable for growth of the bacteria such as a Tryptone Soya Agar plate. The plate may be incubated for 24 to 48 hours at 37°C, and the number of colonies counted and compared to the number of colonies in a control culture not exposed to a biocidal article. Anti-microbial efficacy can be measured as the percentage of killing of the *E. coli* or *Staphlococcus aureus* in the culture. Preferably, the articles and multi-layer articles have an anti-microbial efficacy of greater than or equal to about 50%, preferably greater than about 70%, and most preferably greater than or equal to about 95% killing of the *E. coli* culture or *Staphlococcus aureus* culture.

The inventors herein have discovered that when an article or multi-layer article is formed by extrusion, milling, or molding, for example, a thin film of polymer that is different in composition from the bulk of the article is formed on the exterior surface of the article. This thin film or skin can be as thin as a few angstroms up to about 4 millimeters, yet the presence of this film can inhibit the biocidal activity (i.e., biocidal metal release and/or anti-microbial efficacy) of the articles and/or multi-layer articles. There are several approaches that can be employed to achieve sufficient biocidal activity in an article may be measured, for example, as biocidal metal release. For example, an article preferably has a biocidal metal release factor of greater than or equal to about 2.5.

One approach to the problem of providing sufficient biocidal activity is texturizing the exterior surface of the article and/or multi-layer article to produce a textured article. By texturizing the exterior surface of the article or multi-layered article, it is meant that the surface layer is roughened in a manner and to an extent effective to produce a desired level of biocidal activity. Preferably, the articles are effective to kill at least 50% of a pathogenic organism in contact with the exterior surface over a period of 24 hours at 25°C. Also preferably the articles have an exterior surface having a biocidal metal release factor of greater than or equal to about 2.5. The exterior surface of the textured article may or may not have a detectable surface roughness depending, at least in part, on the thickness of the surface film and the degree of roughening required to achieve the desired level of biocidal activity. Texturizing can be accomplished, for example, by mechanically or chemically abrading (e.g., polishing, or roughening) an article post-extrusion or post-molding, with sandpaper or a rough cloth. Alternatively, texturizing can be done in a calender using a roller having surface discontinuities (i.e., protrusions) that interrupt the continuity of the surface during processing. In this case, the roller imparts the exterior surface texture to the article leading to the desired level of biocidal activity. In an alternative process, texturizing can be done by molding (e.g., blow molding, injection molding, vacuum molding, etc.) into a mold having surface discontinuities (i.e., protrusions) that produce roughness on the surface film during processing. In this case, the mold imparts the exterior surface texture to the article leading to the desired level of biocidal activity. Texturizing increases the biocidal activity of the articles as compared to an untextured article. Because of the improved biocidal activity, lower levels of biocidal agent may be used. Reducing the levels of biocidal agent can result in improvement in the impact, light transmission, yellowness index, and haze properties of the articles. Texturizing should result in a surface roughness of the article greater than 20 nm, preferably greater than or equal to about 50 nm, more preferably greater than or equal to about 100 nm, and most preferably greater than or equal to about 200 nm. Surface roughness may be measured by a suitable technique such as, for example, atomic force microscopy (AFM) performed in tapping mode.

Thus, in one aspect, the desired level of biocidal activity may be provided by an article or multi-layer article, wherein the exterior surface comprises an inorganic biocidal agent and a first thermoplastic resin. The exterior surface may be textured. A multi-layer article comprises a first thermoplastic resin layer and a second thermoplastic resin layer, wherein a first side of the first thermoplastic resin layer is disposed on at least a portion of a first side of the second thermoplastic resin layer, and wherein the first thermoplastic resin layer comprises an inorganic biocidal agent. A second side of the first thermoplastic resin layer may comprise a textured exterior surface over at least a portion thereof. In some cases, the first thermoplastic resin layer may be referred to as a cap layer. The first and second thermoplastic resins may be the same or different. In addition, the second thermoplastic resin layer and any subsequent layers may also comprise an inorganic biocidal agent that is the same as or different than that in the textured exterior surface. The multi-layer article may contain other layers in addition to the first and second thermoplastic resin layers which may contain the same or different thermoplastic resin as the first and second thermoplastic resin.

In another embodiment, the first or exterior layer of a multi-layer article may have a thickness that is less than or equal to the diameter of a single particle of the inorganic biocidal agent. For example, certain biocidal zeolites have a diameter of about 15 micrometers. In this case, the first layer may have a thickness of less than or equal to 15 micrometers to achieve the desired level of biocidal activity.

In yet another embodiment, the desired biocidal activity may also be achieved by thermoforming an article (e.g., extruded sheet, film, molded article, film, or sheet) into a shaped article. Thermoforming may be performed on a textured or untextured article or multi-layer article, wherein the exterior surface of the article comprises an inorganic biocidal agent. By textured it is meant that the exterior the surface layer of the article is roughened in a manner and to an extent effective to produce a desired level of biocidal activity. Preferably, the shaped articles are effective to kill at least 50% of a pathogenic organism in contact with the exterior surface over a period of 24 hours at 25°C. Preferably, the biocidal metal release factor is greater than or equal to about 2.5, more preferably greater than or equal to about 3, and most preferably greater than or equal to about 4. Thermoforming is done under conditions effective to improve the biocidal activity of the shaped article compared to the biocidal activity of the article prior to thermoforming. When the article or multi-layer article is thermoformed, the surface of the article is stretched. Without being held to theory, it is believed that this stretching reduces the thickness of the above-described thin film on the surface of the article, and results in improved silver release, and thus improved anti-microbial efficacy of the thermoformed articles.

An article (i.e., a single layer article) may have a thickness of about 50 micrometers ($\mu$m) to about 25 cm. Preferably, the article has a thickness of greater than or equal to about 50 micrometers, more preferably greater than or equal to about 0.85 mm, and most preferably greater than or equal to about 1 mm. Also preferably, the article has a thickness of less than or equal to about 30 mm, preferably less than or equal to about 25 mm, and most preferably less than or equal to about 20 mm.

A multi-layer article comprises a first thermoplastic resin layer comprising an inorganic biocidal agent, and a second thermoplastic resin layer disposed on and in contact with at least a portion of a first side of the first thermoplastic resin layer. The second side of the first thermoplastic resin may comprise a textured exterior surface over at least a portion thereof. The first thermoplastic resin layer may have a thickness of about 5 $\mu$m to about 150 $\mu$m. Preferably, the first thermoplastic resin layer has a thickness of greater than or equal to about 15 $\mu$m, more preferably greater than or

equal to about 20 μm, and most preferably greater than or equal to about 25 μm. Also preferably, the first thermoplastic resin layer has a thickness of less than or equal to about 90 μm, preferably less than or equal to about 80 μm, and most preferably less than or equal to about 70 μm. The second thermoplastic resin layer may have a thickness of about 50 micrometers (μm) to about 25 cm. Preferably, the second thermoplastic resin layer has a thickness of greater than or equal to about 0.75 mm, more preferably greater than or equal to about 0.85 mm, and most preferably greater than or equal to about 1 mm. Also preferably, the second thermoplastic resin layer has a thickness of less than or equal to about 30 mm, preferably less than or equal to about 25 mm, and most preferably less than or equal to about 20 mm.

The inorganic biocidal agent comprises a biocidal metal. Suitable inorganic biocidal agents may include mercury, tin, lead, bismuth, cadmium, chromium, thallium, silver, gold, copper, and zinc ions, and combinations comprising one or more of the foregoing metals. Biocidal metal ions (cations) are believed to exert their effects by disrupting respiration and electron transport systems upon absorption into bacterial or fungal cells, for example. Silver, gold, copper, and zinc, in particular, are considered safe even for *in vivo* use. Silver is particularly useful for *in vivo* use because it is not substantially absorbed into the body. That is, if such materials are used, they should pose no significant health hazard.

The inorganic biocidal agent comprising a biocidal metal may be in the form of a biocidal metal salt, a hydroxyapatite comprising a biocidal metal, a zirconium phosphate, a biocidal zeolite, or a combination comprising one or more of the foregoing forms. Biocidal metals and metal salts may be nanostructured (i.e., having particle sizes of 1 to 100 nanometers).

Suitable biocidal metal salts include, for example, silver acetate, silver benzoate, silver carbonate, silver ionate, silver iodide, silver lactate, silver laureate, silver nitrate, silver oxide, silver palpitate, silver protein, silver sulfadiazine, silver sulfate, silver chloride, zinc oxide, copper salts, and combinations comprising one or more of the foregoing biocidal metal salts.

Suitable biocidal zeolites are those in which ion exchangeable ions are partially or completely ion exchanged with biocidal metal ions. Examples of suitable biocidal ions are silver, copper, zinc, mercury, tin, lead, bismuth, cadmium, chromium, thallium ions, and combinations comprising one or more of the foregoing metal ions. Preferred biocidal metal ions are silver, copper and zinc ions. These metal ions may be used alone or in combination. It is also possible to use a biocidal zeolite which has been ion exchanged with ammonium ions in addition to the biocidal metal ions in order to reduce discoloration of resins into which the biocidal zeolites are incorporated.

Either natural or synthetic zeolites may be used. Zeolites are aluminosilicates having a three dimensional skeletal structure represented by the following formula: $MO_{2/n}$ - $xAl_2O_3$ -$ySiO_2$ -$zH_2O$. In the general formula, M represents an ion exchangeable ion and, in general, a monovalent or divalent metal ion such as an alkali or alkaline earth, n represents atomic valency of the (metal) ion M, x and y represent coefficients of metal oxide and silica, respectively, and z represents the number of waters of crystallization.

Examples of such zeolites include A-type zeolites, X-type zeolites, Y-type zeolites, T-type zeolites, high-silica zeolites, sodalite, mordenite, analcite, clinoptilolite, chabazite, erionite, and the like, and combinations comprising one or more of the foregoing zeolites. The ion-exchange capacities of these exemplified zeolites are as follows: A-type zeolite=7 milliequivalents/gram (meq/g); X- type zeolite=6.4 meq/g; Y-type zeolite=5 meq/g; T-type zeolite=3.4 meq/g; sodalite=11.5 meq/g; mordenite=2.6 meq/g; analcite=5 meq/g; clinoptilolite=2.6 meq/g; chabazite=5 meq/g; and erionite=3.8 meq/g. Thus, all the zeolites listed above have ion exchange capacities sufficient to undergo ion exchange with biocidal metal and ammonium ions, and these zeolites may be used alone or in combination in the biocidal articles and layers.

The biocidal metal ions in the biocidal zeolite are in general comprised in the zeolite in an amount of about 0.1 wt% to about 15 wt% on the basis of the weight of the zeolite. The percentage of silver ions is preferably about 0.1 wt% to about 5 wt%; and that of copper and zinc ions are preferably about 0.1 wt% to about 8 wt% in order to impart an effective biocidal action to the zeolite. The content of ammonium ions in zeolite is about 0.0 wt% to about 5 wt%, preferably about 0.5 wt% to about 2 wt%, based on the total weight of the zeolite. The term wt% means percent by weight expressed in the weight of the zeolite weighed after drying at a temperature of 110°C.

The biocidal zeolite may be made by contacting a zeolite with an aqueous solution comprising biocidal metal ions such as silver, copper and/or zinc ions and optionally ammonium ions to cause ion exchange between ion-exchangeable ions present in zeolite and the biocidal metal ions. The contacting may be carried out according to a batch technique or a continuous technique (e.g., a column method) at a temperature of about 10°C to about 70°C, preferably about 40°C to about 60°C, for about 3 to abut 24 hours, preferably about 10 to about 24 hours. During the contacting, the pH of the aqueous mixed solution is adjusted to about 3 to about 10, preferably about 5 to about 7, in order to reduce deposition of silver oxide and the like on the surface of the zeolite or within pores of the zeolite.

Each of the ion species may be used in the form of a salt to prepare the aqueous solution. Suitable ammonium ion sources include, for example, ammonium nitrate, ammonium sulfate, ammonium acetate, and combinations comprising one or more of the foregoing ammonium ion sources. Suitable silver ion sources include, for example, silver nitrate, silver sulfate, silver perchlorate, silver acetate, diamine silver nitrate, and combinations comprising one or more of the foregoing silver ion sources. Suitable copper ion sources include, for example, copper(II) nitrate, copper sulfate,

copper perchlorate, copper acetate, tetracyan copper potassium, and combinations comprising one or more of the foregoing copper ion sources. Suitable zinc ion sources include, for example, zinc(II) nitrate, zinc perchlorate, zinc acetate, zinc thiocyanate, and combinations comprising one or more of the foregoing zinc ion sources. Suitable mercury ion sources include, for example, mercury perchlorate, mercury nitrate, mercury acetate, and combinations comprising one or more of the foregoing mercury ion sources. Suitable tin ion sources include, for example, tin sulfate. Suitable lead ion sources include, for example, lead sulfate, lead nitrate, and combinations comprising one or more of the foregoing lead ion sources. Suitable bismuth ion sources include, for example, bismuth chloride, bismuth iodide, and combinations comprising one or more of the foregoing bismuth sources. Suitable cadmium ion sources include, for example, cadmium perchlorate, cadmium sulfate, cadmium nitrate, cadmium acetate, and combinations comprising one or more of the foregoing cadmium sources. Suitable chromium ion sources include, for example, chromium perchlorate, chromium sulfate, chromium ammonium sulfate, chromium acetate, and combinations comprising one or more of the foregoing chromium ion sources. Suitable thallium ion sources include, for example, thallium perchlorate, thallium sulfate, thallium nitrate, thallium acetate, and combinations comprising one or more of the foregoing thallium sources. A combination of different ions and/or different ion sources may be used to form a single biocidal zeolite. In addition, a combination of zeolites containing different biocidal metal ions may be employed.

The content of the ions may be controlled by adjusting the concentration of each ion species (or salt) in the aqueous solution. For instance, if the biocidal zeolite comprises ammonium and silver ions, a biocidal zeolite having an ammonium ion content of about 0.5 wt% to about 5 wt% and a silver ion content of about 0.1 wt% to about 5 wt% can be obtained by bringing the zeolite into contact with an aqueous solution having an ammonium ion concentration of about 0.85 mole/liter to about 3.1 mole/liter and a silver ion concentration of about 0.002 mole/liter to about 0.15 mole/liter. If the biocidal zeolite further comprises copper and/or zinc ions, the biocidal zeolite having copper and/or zinc ion contents of about 0.1 wt% to about 8 wt%, respectively, can be prepared by employing an aqueous mixed solution comprising about 0.1mole/liter to about 0.85 mole/liter of copper ions and/or about 0.15 mole/liter to about 1.2 mole/liter of zinc ions in addition to the foregoing amount of ammonium and silver ions.

Alternatively, the biocidal zeolites may also be prepared by using separate aqueous solutions each comprising single ion species (or salt) and bringing the zeolite into contact with each solution one by one to cause ion-exchange therebetween. The concentration of each ion species in a specific solution can be determined in accordance with the concentrations of those ion species in the previously described aqueous solutions.

After the ion-exchange treatment, the resulting biocidal zeolites may be washed with water, followed by drying. The drying may allow the production of pinhole-free biocidal final products. Therefore, the biocidal zeolites may be dried under conditions such that the zeolite does not cause evaporation or elimination of water during forming resins admixed with the biocidal zeolite into biocidal films. It is preferable to dry the biocidal zeolites until the residual moisture content in the zeolite reaches about 3 wt% to 5 wt%. For that purpose, it is desirable to dry the zeolite at about 100°C to 400°C, preferably about 150°C to 250°C under normal pressure, or at 50°C to 250°C, preferably 100°C to 200°C under a reduced pressure (e.g., about 1 to 30 torr).

After drying, the biocidal zeolites may be pulverized and classified and then incorporated into a desired biocidal composition. The average particle size of the biocidal zeolites are less than or equal to about 6 microns, preferably about 0.3 to about 4 microns, and more preferably about 0.5 to about 2 microns.

Hydroxyapatite particles comprising biocidal metals are described, for example, in U.S. Patent No. 5,009,898. Hydroxyapatites include the synthetic and natural hydroxyapatites as shown by the formula $Ca_{10}(PO_4)_6(OH)_2$. Apatites in which a part of the OH radical is changed to F or Br- can be also used. Biocidal hydroxyapatites comprising biocidal metal ions can be produced by having biocidal metal salts present when the hydroxyapatites are produced or by reacting the hydroxyapatites with the biocidal metal salts. The amounts of biocidal metal ions comprised in the hydroxyapatites are optionally adjusted for the kinds of biocidal metal salts used, the concentrations of the solutions treated, and the reaction temperature. However, if the structure of the biocidal hydroxyapatite as produced is changed from the apatite structure, then it is preferable to limit the amounts of metal salts per hydroxyapatite to 30 wt% or less, preferably 0.0001 wt% to 5 wt%.

Zirconium phosphates comprising biocidal metals are described, for example, in U.S. Patent Nos. 5,296,238; 5,441,717; and 5,405,644. Suitable phosphates may be represented by $M^1{}_a\,A_b\,M^2{}_c\,(PO_4)_d.nH_2O$, wherein $M^1$ represents at least one element selected from silver, copper, zinc, tin, mercury, lead, iron, cobalt, nickel, manganese, arsenic, antimony, bismuth, barium, cadmium, and chromium, $M^2$ represents at least one element selected from tetravalent metal elements, A represents at least one ion selected from hydrogen ion, alkali metal ion, alkaline earth metal ion, and ammonium ion, n is a number which satisfies $0 \leq n \leq 6$, a and b are positive numbers and satisfy la+mb=1 or la+mb=2, and when a and b satisfy la+mb=1, c is 2 and d is 3, and when a and b satisfy la+mb=2, c is 1 and d is 2, where 1 represents valence of $M^1$ and m represents valence of A.

The inorganic biocidal agent is mixed with at least one thermoplastic resin and optional additional additives to form a biocidal thermoplastic composition. The inorganic biocidal agent may be employed in an amount of about 0.1 percent by weight (wt%) to about 20 wt%, based on the total weight of the biocidal thermoplastic composition. The

inorganic biocidal agent is preferably present in an amount of greater than or equal to about 0.2 wt%, more preferably greater than or equal to about 0.5 wt%, and most preferably greater than or equal to about 1 wt%, based on the total weight of the biocidal thermoplastic composition. The inorganic biocidal agent is preferably present in an amount of less than or equal to about 15 wt%, more preferably less than or equal to about 10 wt%, and most preferably less than or equal to about 5 wt%, based on the total weight of the biocidal thermoplastic composition. In practice, the biocidal thermoplastic composition may be used to form a single layer article or one layer of a multi-layer article.

The biocidal thermoplastic composition for the formation of biocidal layers, articles and multi-layer articles comprises suitable thermoplastic resins or combinations of thermoplastic resins so far as they can be formed into layers. In a multi-layer article, the layers may comprise the same or different thermoplastic resins or mixtures of resins. Thermoplastic resins that may be used are oligomers, polymers, ionomers, dendrimers, copolymers such as block copolymers, graft copolymers, star block copolymers, random copolymers, and the like, as well as combinations comprising one or more of the foregoing polymers. Examples of such thermoplastic resins include polycarbonate resins, polystyrene resins, copolymers of polycarbonate and styrene, polycarbonate- polybutadiene blends, blends of polycarbonate, copolyester polycarbonates, polyetherimide resins, polyimides, polypropylene resins, acrylonitrile-styrene-butadiene, polyphenylene ether-polystyrene blends, polyalkylmethacrylates resins such as polymethylmethacrylate resin, polyester resins, copolyester resins, polyolefin resins such as polypropylene and polyethylene, high density polyethyelenes, low density polyethylenes, linear low density polyethylenes, polyamide resins, polyamideimides, polyarylates, polyarylsulfones, polyethersulfones, polyphenylene sulfides, polytetrafluoroethylenes, polyethers, polyether ketone resins, polyether etherketones, polyether ketone ketones, polyacrylics, polyacetals, polybenzoxazoles, polyoxadiazoles, polybenzothiazinophenothiazines, polybenzothiazoles, polypyrazinoquinoxalines, polypyromellitimides, polyquinoxalines, polybenzimidazoles, polyoxindoles, polyoxoisoindolines, polydioxoisoindolines, polytriazines, polypyridazines, polypiperazines, polypyridines, polypiperidines, polytriazoles, polypyrazoles, polypyrrolidines, polycarboranes, polyoxabicyclononanes, polydibenzofurans, polyphthalides, polyacetals, polyanhydrides, polyvinyl ethers, polyvinyl thioethers, polyvinyl alcohols, polyvinyl ketones, polyvinyl halides, polyvinyl nitriles, polyvinyl esters, polysulfonates, polysulfides, polythioesters, polysulfone resins, polysulfonamides, polyureas, polyphosphazenes, polysilazzanes, polysiloxanes, polyvinylchlorides, and combinations comprising one or more of the foregoing resins. Preferred thermoplastic resins include polycarbonate resins (available as Lexan ® from the General Electric Co.), polyphenylene ether-polystyrene blends (e.g., Noryl ® resins available from the General Electric Co.), polyetherimide resins (e.g., Ultem ® resins available from General Electric Co.), polybutylene terephthalate-polycarbonate blends (e.g., Xenoy ® resins available from the General Electric Co.), copolyestercarbonate resins (e.g. Lexan ® SLX resins available from the General Electric Co.), and combinations comprising one or more of the foregoing resins. Particularly preferred resins include homopolymers and copolymers of a polycarbonate, a polyester, a polyacrylate, a polyamide, a polyetherimide, a polyphenylene ether, or a combination comprising one or more of the foregoing resins.

As used herein, the terms "polycarbonate", "polycarbonate resin", and "composition comprising aromatic carbonate chain units" include compositions having structural units of the formula (I):

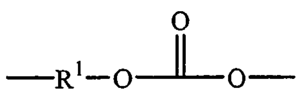

(I)

in which greater than or equal to about 60 percent of the total number of $R^1$ groups are aromatic organic radicals and the balance thereof are aliphatic, alicyclic, or aromatic radicals. Preferably, $R^1$ is an aromatic organic radical and, more preferably, a radical of the formula (II):

$$-A^1-Y^1-A^2- \qquad (II)$$

wherein each of $A^1$ and $A^2$ is a monocyclic divalent aryl radical and $Y^1$ is a bridging radical having one or two atoms which separate $A^1$ from $A^2$. In some cases, one atom separates $A^1$ from $A^2$. Illustrative non-limiting examples of radicals of this type are - O-, -S-, -S(O)-, $-S(O)_2-$, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical $Y^1$ can be a hydrocarbon group or a saturated hydrocarbon group such as methylene, cyclohexylidene, or isopropylidene, for example.

Polycarbonates can be produced by the interfacial reaction of dihydroxy compounds in which only one atom separates $A^1$ and $A^2$. As used herein, the term "dihydroxy compound" includes, for example, bisphenol compounds having general formula (III) as follows:

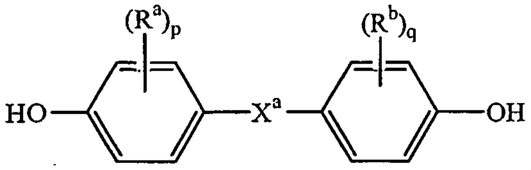

(III)

wherein $R^a$ and $R^b$ each represent a halogen atom or a monovalent hydrocarbon group and may be the same or different; p and q are each independently integers from 0 to 4; and $X^a$ represents one of the groups of formula (IV):

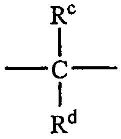 , 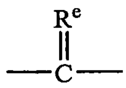 , —O— , —S— , 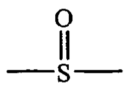 , or 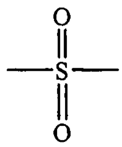

(IV)

wherein $R^c$ and $R^d$ each independently represent a hydrogen atom or a monovalent linear or cyclic hydrocarbon group and $R^e$ is a divalent hydrocarbon group, oxygen, or sulfur. Also, $R^c$ and $R^d$ may form a substituted or unsubstituted ring together.

Some illustrative, non-limiting examples of suitable dihydroxy compounds include the dihydroxy-substituted aromatic hydrocarbons disclosed by name or formula (generic or specific) in U.S. Patent No. 4,217,438. A nonexclusive list of specific examples of the types of bisphenol compounds that may be represented by formula (III) includes the following:

1,1-bis(4-hydroxyphenyl) methane;

1,1-bis(4-hydroxyphenyl) ethane;

2,2-bis(4-hydroxyphenyl) propane (hereinafter "bisphenol A" or "BPA");

2,2-bis(4-hydroxyphenyl) butane;

2,2-bis(4-hydroxyphenyl) octane;

1,1-bis(4-hydroxyphenyl) propane;

1,1 -bis(4-hydroxyphenyl)n-butane;

bis(4-hydroxyphenyl) phenylmethane;

2,2-bis(4-hydroxy-1-methylphenyl) propane;

1,1-bis(4-hydroxy-t-butylphenyl) propane;

2,2-bis(4-hydroxy-3-bromophenyl) propane;

1,1-bis(4-hydroxyphenyl) cyclopentane; and

1,1-bis(4-hydroxyphenyl) cyclohexane.

Other bisphenol compounds that may be represented by formula (III) include those where X is -O-, -S-, -SO- or $-S(O)_2-$. Some examples of such bisphenol compounds are bis(hydroxyaryl)ethers such as 4,4'-dihydroxy diphenylether, 4,4'-dihydroxy-3,3'-dimethylphenyl ether, and the like; bis(hydroxy diaryl)sulfides, such as 4,4'-dihydroxy diphenyl sulfide, 4,4'-dihydroxy-3,3'-dimethyl diphenyl sulfide, or the like; bis(hydroxy diaryl) sulfoxides, such as, 4,4'-dihydroxy

diphenyl sulfoxides, 4,4'-dihydroxy-3,3'-dimethyl diphenyl sulfoxides, and the like; bis(hydroxy diaryl)sulfones, such as 4,4'-dihydroxy diphenyl sulfone, 4,4'-dihydroxy-3,3'-dimethyl diphenyl sulfone, and the like; and combinations comprising one or more of the foregoing bisphenol compounds.

Other bisphenol compounds that may be utilized in the polycondensation of polycarbonate are represented by the formula (V)

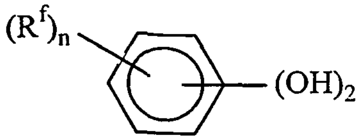

(V)

wherein, $R^f$, is a halogen atom of a hydrocarbon group having 1 to 10 carbon atoms or a halogen substituted hydrocarbon group; n is a value from 0 to 4. When n is at least 2, each $R^f$ may be the same or different. Examples of bisphenol compounds that may be represented by the formula (V), are resorcinol, substituted resorcinol compounds such as 5-methyl resorcin, 5-ethyl resorcin, 5-propyl resorcin, 5-butyl resorcin, 5-t-butyl resorcin, 5-phenyl resorcin, 5-cumyl resorcin, or the like; catechol, hydroquinone, substituted hydroquinones, such as 3-methyl hydroquinone, 3-ethyl hydroquinone, 3-propyl hydroquinone, 3-butyl hydroquinone, 3-t-butyl hydroquinone, 3-phenyl hydroquinone, 3-cumyl hydroquinone, and the like; and combinations comprising one or more of the foregoing bisphenol compounds.

Bisphenol compounds such as 2, 2, 2', 2'- tetrahydro-3, 3, 3', 3'- tetramethyl-1, 1'-spirobi-[IH-indene]-6, 6'- diol represented by the following formula (VI) may also be used.

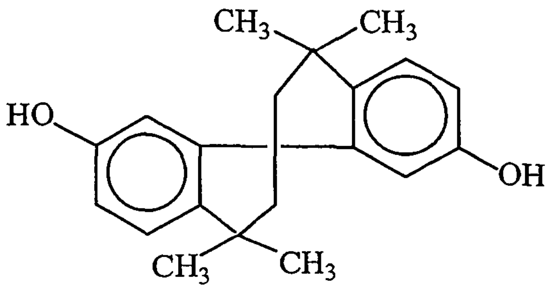

(VI)

Suitable polycarbonates further include those derived from bisphenols containing alkyl cyclohexane units. Such polycarbonates have structural units corresponding to the formula (VII)

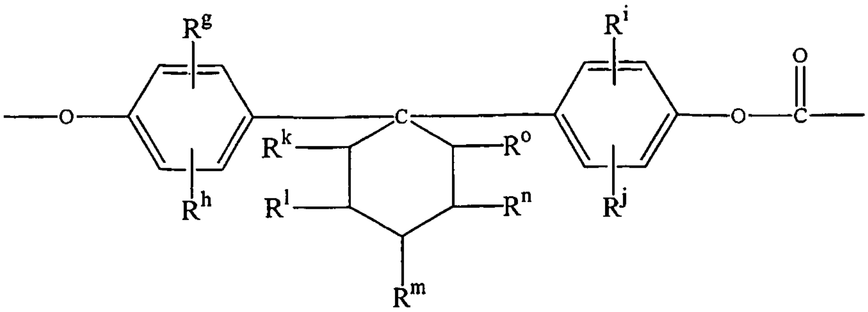

(VII)

wherein $R^g$-$R^j$ are each independently hydrogen, $C_1$-$C_{12}$ hydrocarbyl, or halogen; and $R^k$-$R^o$ are each independently hydrogen, $C_1$-$C_{12}$ hydrocarbyl. As used herein, "hydrocarbyl" refers to a residue that contains only carbon and hydrogen. The residue may be aliphatic or aromatic, straight-chain, cyclic, bicyclic, branched, saturated, or unsaturated. The hydrocarbyl residue may contain heteroatoms over and above the carbon and hydrogen members of the substituent residue. Thus, when specifically noted as containing such heteroatoms, the hydrocarbyl residue may also contain carbonyl groups, amino groups, hydroxyl groups, or the like, or it may contain heteroatoms within the backbone of the hydrocarbyl

residue. Alkyl cyclohexane containing bisphenols, for example the reaction product of two moles of a phenol with one mole of a hydrogenated isophorone, are useful for making polycarbonate polymers with high glass transition temperatures and high heat distortion temperatures. Such isophorone bisphenol-containing polycarbonates have structural units corresponding to the formula (VIII)

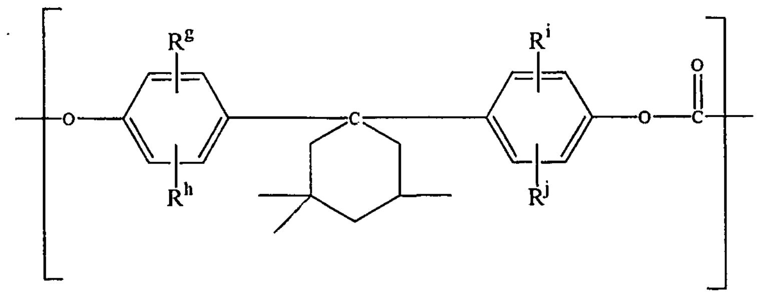

(VIII)

wherein $R^g$-$R^j$ are as defined above. These isophorone bisphenol based polymers, including polycarbonate copolymers made containing non-alkyl cyclohexane bisphenols and blends of alkyl cyclohexyl bisphenol containing polycarbonates with non-alkyl cyclohexyl bisphenol polycarbonates, are supplied by Bayer Co. under the

APEC trade name. A preferred bisphenol compound is bisphenol A.

The dihydroxy compound may be reacted with a hydroxyaryl-terminated poly(diorganosiloxane) to create a polycarbonate-polysiloxane copolymer. Preferably the polycarbonate-poly(diorganosiloxane) copolymers are made by introducing phosgene under interfacial reaction conditions into a mixture of a dihydroxy compound, such as BPA, and a hydroxyaryl-terminated poly(diorganosiloxane). The polymerization of the reactants can be facilitated by use of a tertiary amine catalyst or a phase transfer catalyst.

The hydroxyaryl-terminated poly(diorganosiloxane) can be made by effecting a platinum catalyzed addition between a siloxane hydride of the formula (IX),

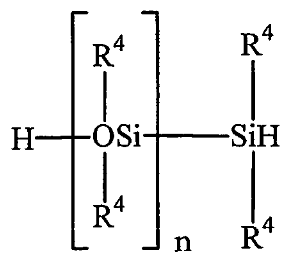

(IX)

and an aliphatically unsaturated monohydric phenol wherein $R^4$ is, for example, $C_{(1-8)}$ alkyl radicals, haloalkyl radicals such as trifluoropropyl and cyanoalkyl radicals; aryl radicals such as phenyl, chlorophenyl and tolyl. $R^4$ is preferably methyl, a mixture of methyl and trifluoropropyl, or a mixture of methyl and phenyl.

Some of the aliphatically unsaturated monohydric phenols, which can be used to make the hydroxyaryl-terminated poly(diorganosiloxane)s are, for example, eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol, 2-allyl-4,6-dimethylphenol, and the like, and combinations comprising one or more of the foregoing phenols.

Typical carbonate precursors include the carbonyl halides, for example carbonyl chloride (phosgene), and carbonyl bromide; the bis-haloformates, for example the bis-haloformates of dihydric phenols such as bisphenol A, hydroquinone, or the like, and the bis-haloformates of glycols such as ethylene glycol and neopentyl glycol; and the diaryl carbonates, such as diphenyl carbonate, di(tolyl) carbonate, and di(naphthyl) carbonate. A preferred carbonate precursor for the interfacial reaction is carbonyl chloride.

It is also possible to employ polycarbonates resulting from the polymerization of two or more different dihydric phenols or a copolymer of a dihydric phenol with a glycol or with a hydroxy- or acid-terminated polyester or with a dibasic acid or with a hydroxy acid or with an aliphatic diacid in the event a carbonate copolymer rather than a homopolymer is desired for use. Generally, useful aliphatic diacids have about 2 to about 40 carbons. A preferred aliphatic diacid is

dodecanedioic acid.

Branched polycarbonates, as well as blends of linear polycarbonates and branched polycarbonates may also be used in the core layer. The branched polycarbonates may be prepared by adding a branching agent during polymerization. These branching agents may comprise polyfunctional organic compounds comprising at least three functional groups, which may be hydroxyl, carboxyl, carboxylic anhydride, haloformyl, and combinations comprising one or more of the foregoing branching agents. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1, 1-bis(p-hydroxyphenyl)-ethyl) $\alpha,\alpha$-dimethyl benzyl)phenol), 4-chloroformyl phthalic anhydride, trimesic acid, benzophenone tetracarboxylic acid, and the like, and combinations comprising one or more of the foregoing branching agents. The branching agents may be added at a level of about 0.05 wt% to about 4.0 wt%, based upon the total weight of the polycarbonate in a given layer.

The polycarbonate may be produced by a melt polycondensation reaction between a dihydroxy compound and a carbonic acid diester. Examples of the carbonic acid diesters that may be utilized to produce the polycarbonates are diphenyl carbonate, bis(2,4-dichlorophenyl)carbonate, bis(2,4,6-trichlorophenyl) carbonate, bis(2-cyanophenyl) carbonate, bis(o-nitrophenyl) carbonate, ditolyl carbonate, m-cresyl carbonate, dinaphthyl carbonate, bis(diphenyl) carbonate, diethyl carbonate, dimethyl carbonate, dibutyl carbonate, dicyclohexyl carbonate, bis(o-methoxycarbonylphenyl)carbonate, bis(o-ethoxycarbonylphenyl)carbonate, bis(o-propoxycarbonylphenyl)carbonate, bis-ortho methoxy phenyl carbonate, bis(o-butoxycarbonylphenyl)carbonate, bis(isobutoxycarbonylphenyl)carbonate, o-methoxycarbonylphenyl-o-ethoxycarbonylphenylcarbonate, bis o-(tert-butoxycarbonylphenyl)carbonate, o-ethylphenyl-o-methoxycarbonylphenyl carbonate, p-(tertbutylphenyl)-o-(tert-butoxycarbonylphenyl)carbonate, bis-methyl salicyl carbonate, bis-ethyl salicyl carbonate, bis-propyl salicyl carbonate, bis-butyl salicyl carbonate, bis- benzyl salicyl carbonate, bis-methyl 4-chlorosalicyl carbonate, and the like, and combinations comprising one or more of the foregoing carbonic acid diesters. A preferred carbonic acid diester is diphenyl carbonate or bis-methyl salicyl carbonate.

Preferably, the weight average molecular weight of the polycarbonate is about 3,000 to about 1,000,000 grams/mole (g/mole). The polycarbonate preferably has a molecular weight of about 10,000 to about 100,000 g/mole. The polycarbonate more preferably has a molecular weight of about 20,000 to about 50,000 g/mole. The polycarbonate most preferably has a molecular weight of about 25,000 to about 35,000 g/mole.

The term "polystyrene" as used herein includes polymers prepared by methods known in the art including bulk, suspension and emulsion polymerization, which comprise greater than or equal to about 25% by weight of structural units derived from a monomer of the formula

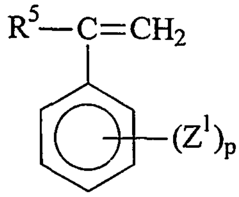

(X)

wherein $R^5$ is hydrogen, lower alkyl or halogen; $Z^1$ is vinyl, halogen or lower alkyl; and p is 0 to about 5. These resins include homopolymers of styrene, chlorostyrene and vinyltoluene, random copolymers of styrene with one or more monomers illustrated by acrylonitrile, butadiene, alpha-methylstyrene, ethylvinylbenzene, divinylbenzene and maleic anhydride, and rubber-modified polystyrenes comprising blends and grafts, wherein the rubber is a polybutadiene or a rubbery copolymer of about 98% to about 70% styrene and about 2% to about 30% diene monomer.

The polyalkylmethacrylates may comprise polymethylmethacrylate (PMMA). Polymethylmethacrylate may be produced by the polymerization of methylmethacrylate monomer. The polymethylmethacrylate may be in the form of a polymethylmethacrylate homopolymer or a copolymer of polymethylmethacrylate with one or more $C_1$ -$C_4$ alkyl acrylates, for example, ethyl acrylate. Generally, polymethylmethacrylate homopolymer is available commercially as the homopolymer or as one or more copolymers of methyl methacrylate with one or more $C_1$ -$C_4$ alkyl acrylates

Suitable polyesters include those derived from an aliphatic, cycloaliphatic, or aromatic diols, or mixtures thereof, comprising about 2 to about 10 carbon atoms and an aliphatic, cycloaliphatic, or aromatic dicarboxylic acid, and have repeating units of the following general formula:

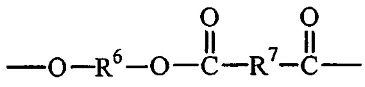

(XI)

wherein $R^6$ and $R^7$ are each independently a divalent $C_1$-$C_{20}$ aliphatic radical, a $C_2$-$C_{12}$ cycloaliphatic alkyl radical, or a $C_6$-$C_{24}$ aromatic radical.

The diol may be a glycol, such as ethylene glycol, propylene glycol, trimethylene glycol, 2-methyl-1,3-propane glycol, hexamethylene glycol, decamethylene glycol, cyclohexane dimethanol, or neopentylene glycol; or a diol such as 1,4-butanediol, hydroquinone, or resorcinol.

Examples of aromatic dicarboxylic acids represented by the decarboxylated residue R are isophthalic or terephthalic acid, 1,2-di(p-carboxyphenyl)ethane, 4,4'-dicarboxydiphenyl ether, 4,4' bisbenzoic acid, and mixtures thereof. All of these acids comprise at least one aromatic nucleus. Acids comprising fused rings can also be present, such as in 1,4- 1,5- or 2,6-naphthalene dicarboxylic acids. The preferred dicarboxylic acids are terephthalic acid, isophthalic acid, naphthalene dicarboxylic acid or a mixture thereof.

A preferred cycloaliphatic polyester is poly(1,4-cyclohexane-dimethanol-1,4-cyclohexanedicarboxylate) (PCCD) having recurring units of formula (XII)

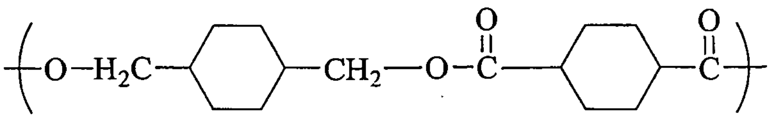

(XII)

wherein in the formula (XI) $R^6$ is a cyclohexane ring, and wherein $R^7$ is a cyclohexane ring derived from cyclohexanedicarboxylate or a chemical equivalent thereof and is selected from the cis- or trans-isomer or a mixture of cis- and trans-isomers thereof. Cycloaliphatic polyester polymers can be generally made in the presence of a suitable catalyst such as a tetra(2-ethyl hexyl)titanate, in a suitable amount, generally about 50 to 400 ppm of titanium based upon the total weight of the final product.

PCCD is generally completely miscible with the polycarbonate. It is generally desirable for a polycarbonate-PCCD mixture to have a melt volume rate of greater than or equal to about 5 cubic centimeters/10 minutes (cc/10 min or ml/10 min) to less than or equal to about 150 cubic centimeters/10 minutes when measured at 265°C, at a load of 2.16 kilograms and a four minute dwell time. Within this range, it is generally desirable to have a melt volume rate of greater than or equal to about 7, preferably greater than or equal to about 9, and more preferably greater than or equal to about 10 cc/10 min when measured at 265°C, at a load of 2.16 kilograms and a four minute dwell time. Also desirable within this range, is a melt volume rate of less than or equal to about 125, preferably less than or equal to about 110, and more preferably less than or equal to about 100 cc/10 minutes.

Other preferred polyesters that may be mixed with the polycarbonate are polyethelene terephthalate (PET), polybutylene terephthalate (PBT), poly(trimethylene terephthalate) (PTT), poly(cyclohexanedimethanol-co-ethylene terephthalate) (PETG), poly(ethylene naphthalate) (PEN), poly(butylene naphthalate) (PBN), and combinations comprising one or more of the foregoing polyesters.

Another preferred polyester that may be mixed with other polymers are polyarylates. Polyarylates generally refers to polyesters of aromatic dicarboxylic acids and bisphenols. Polyarylate copolymers that include carbonate linkages in addition to the aryl ester linkages, are termed polyester-carbonates, and may also be advantageously utilized in the mixtures. The polyarylates can be prepared in solution or by the melt polymerization of aromatic dicarboxylic acids or their ester forming derivatives with bisphenols or their derivatives.

In general, it is preferred for the polyarylates to comprise at least one diphenol moiety derived from diphenol in combination with at least one aromatic dicarboxylic acid residue. The preferred diphenol residue, illustrated in formula (XIII), is derived from a 1,3-dihydroxybenzene moiety, referred to throughout this specification as resorcinol or resorcinol moiety. Resorcinol or resorcinol moieties include both unsubstituted 1,3-dihydroxybenzene and substituted 1,3-dihydroxybenzenes.

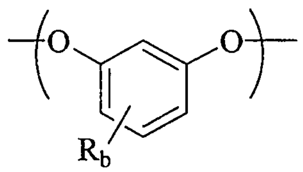

(XIII)

In formula (XIII), $R_b$ is $C_{1-12}$ alkyl or halogen, and b is 0 to 3. Suitable dicarboxylic acid residues include aromatic dicarboxylic acid residues derived from monocyclic moieties, preferably isophthalic acid, terephthalic acid, or mixtures of isophthalic and terephthalic acids, or from polycyclic moieties such as diphenyl dicarboxylic acid, diphenylether dicarboxylic acid, and naphthalene-2,6-dicarboxylic acid, and the like, as well as combinations comprising at least one of the foregoing polycyclic moieties. The preferred polycyclic moiety is naphthalene-2,6-dicarboxylic acid.

Preferably, the aromatic dicarboxylic acid residues are derived from mixtures of isophthalic and/or terephthalic acids as generally illustrated in formula (XIV).

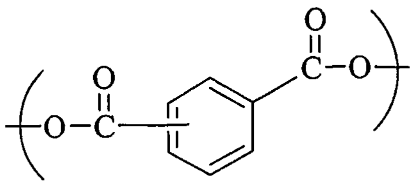

(XIV)

Therefore, in one embodiment the polyarylates comprise resorcinol arylate polyesters as illustrated in formula (XIV) wherein R and n are previously defined for formula (XV).

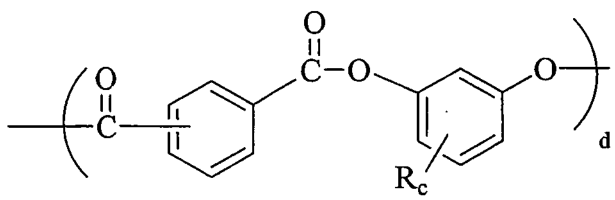

(XV)

wherein R is at least one of $C_{1-12}$ alkyl or halogen, c is 0 to 3, and d is at least about 8. It is preferred for R to be hydrogen. Preferably, c is zero and d is about 10 and about 300. The molar ratio of isophthalate to terephthalate is about 0.25:1 to about 4.0:1.

In another embodiment, the polyarylate comprises thermally stable resorcinol arylate polyesters that have polycyclic aromatic radicals as shown in formula (XV)

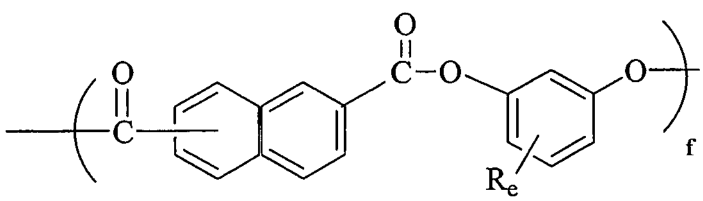

(XVI)

wherein R is at least one of $C_{1-12}$ alkyl or halogen, e is 0 to 3, and f is at least about 8.

In another embodiment, the polyarylates are copolymerized to form block copolyestercarbonates, which comprise carbonate and arylate blocks. They include polymers comprising structural units of the formula (XVII)

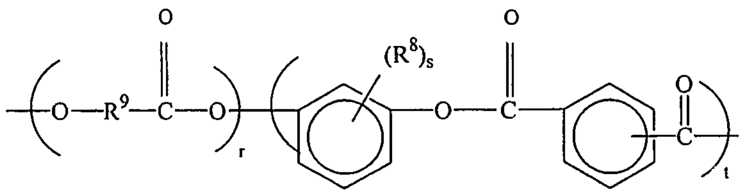

(XVII)

wherein each $R^8$ is independently halogen or $C_{1-12}$ alkyl, r is at least 1, s is about 0 to about 3, each $R^9$ is independently a divalent organic radical, and t is at least about 4. Preferably r is at least about 10, more preferably at least about 20 and most preferably about 30 to about 150. Preferably r is at least about 3, more preferably at least about 10 and most preferably about 20 to about 200. In an exemplary embodiment r is present in an amount of about 20 to about 50.

It is generally desirable for the weight average molecular weight of the polyester to be about 500 to about 1,000,000 grams/mole (g/mole). The polyester preferably has a weight average molecular weight of about 10,000 to about 200,000 g/mole. The polyester more preferably has a weight average molecular weight of about 30,000 to about 150,000 g/mole. The polyester most preferably has a weight average molecular weight of about 50,000 to about 120,000 g/mole. An exemplary molecular weight for the polyester utilized in the cap layer is 60,000 and 120,000 g/mole. These molecular weights are determined against a polystyrene standard.

The above polyesters may comprise minor amounts, e.g., about 0.5 wt% to about 30 wt%, of units derived from aliphatic acids and/or aliphatic polyols to form copolyesters. The aliphatic polyols include glycols, such as poly (ethylene glycol). Such polyesters can be made following the teachings of, for example, U.S. Patent Nos. 2,465,319 and 3,047,539.

Suitable polyesters include, for example, poly(ethylene terephthalate) ("PET"), poly(1,4-butylene terephthalate), ("PBT"), and poly(propylene terephthalate) ("PPT"). One preferred PBT resin is one obtained by polymerizing a glycol component in an amount of greater than or equal to about 70 mole %, preferably greater than or equal to about 80 mole %, of which consists of tetramethylene glycol and an acid component in an amount of greater than or equal to about 70 mole %, preferably greater than or equal to about 80 mole %, of which consists of terephthalic acid, and polyester-forming derivatives therefore. The preferred glycol component comprises less than or equal to about 30 mole %, preferably less than or equal to about 20 mole %, of another glycol, such as ethylene glycol, trimethylene glycol, 2-methyl-1,3-propane glycol, hexamethylene glycol, decamethylene glycol, cyclohexane dimethanol, or neopentylene glycol. The preferred acid component comprises less than or equal to about 30 mole %, preferably less than or equal to about 20 mole %, of another acid such as isophthalic acid, 2,6-naphthalene dicarboxylic acid, 2,7-naphthalene dicarboxylic acid, 1,5-naphthalene dicarboxylic acid, 4,4'-diphenyl dicarboxylic acid, 4,4'-diphenoxyethane dicarboxylic acid, p-hydroxy benzoic acid, sebacic acid, adipic acid and polyester-forming derivatives thereof.

Block copolyester resin components are also useful, and can be prepared by the transesterification of (a) straight or branched chain poly(1,4-butylene terephthalate) and (b) a copolyester of a linear aliphatic dicarboxylic acid and, optionally, an aromatic dibasic acid such as terephthalic or isophthalic acid with one or more straight or branched chain dihydric aliphatic glycols. For example a poly(1,4-butylene terephthalate) can be mixed with a polyester of adipic acid with ethylene glycol, and the mixture heated at 235°C to melt the ingredients, then heated further under a vacuum until the formation of the block copolyester is complete. As the second component, there can be substituted poly(neopentyl adipate), poly(1,6-hexylene azelate-coisophthalate), poly(1,6-hexylene adipate-co-isophthalate) and the like. An exemplary block copolyester of this type is available commercially from General Electric Company, Pittsfield, Mass., under the trade designation VALOX ® 330.

Polyolefins which can be included are of the general structure: $C_nH_{2n}$ and include polyethylene, polypropylene and polyisobutylene with preferred homopolymers being polyethylene, LLDPE (linear low density polyethylene), HDPE (high density polyethylene) and MDPE (medium density polyethylene) and isotatic polypropylene. Polyolefin resins of this general structure and methods for their preparation are well known in the art and are described, for example, in U.S. Patent Nos. 2,933,480, 3,093,621, 3,211,709, 3,646,168, 3,790,519, 3,884,993, 3,894,999, 4,059,654, 4,166,055 and 4,584,334.

Copolymers of polyolefins may also be used such as copolymers of ethylene and alpha olefins like propylene and 4-methylpentene-1. Copolymers of ethylene and $C_3$-$C_{10}$ monoolefins and non-conjugated dienes, herein referred to as EPDM copolymers, are also suitable. Examples of suitable $C_3$-$C_{10}$ monoolefins for EPDM copolymers include propylene, 1-butene, 2-butene, 1-pentene, 2-pentene, 1-hexene, 2-hexene, and 3-hexene. Suitable dienes include 1,4 hexadiene and monocylic and polycyclic dienes. Mole ratios of ethylene to other $C_3$-$C_{10}$ monoolefin monomers can range from about 95:5 to about 5:95 with diene units being present in the amount of about 0.1 mole % to about 10 mole %. EPDM copolymers can be functionalized with an acyl group or electrophilic group for grafting onto the polyphenylene ether as disclosed in U.S. Patent No. 5,258,455.

Polyamide resins are a generic family of resins known as nylons, characterized by the presence of an amide group (-C(O)NH-). Nylon-6 and nylon-6,6 are the generally preferred polyamides and are available from a variety of commercial sources. Other polyamides, however, such as nylon-4,6, nylon-12, nylon-6,10, nylon 6,9, nylon 6/6T and nylon 6,6/6T with triamine contents below about 0.5 weight percent, as well as others, such as the amorphous nylons may be useful for particular PPE-polyamide applications. Mixtures of various polyamides. as well as various polyamide copolymers, are also useful.

The polyamides can be obtained by a number of well known processes such as those described in U.S. Patent Nos. 2,071,250; 2,071,251; 2,130,523; 2,130,948; 2,241,322; 2,312,966; and 2,512,606. Nylon-6, for example, is a polymerization product of caprolactam. Nylon-6,6 is a condensation product of adipic acid and 1,6-diaminohexane. Likewise, nylon 4,6 is a condensation product between adipic acid and 1,4-diaminobutane. Besides adipic acid, other useful diacids for the preparation of nylons include azelaic acid, sebacic acid, dodecane diacid, as well as terephthalic and isophthalic acids, and the like. Other useful diamines include m-xylyene diamine, di-(4-aminophenyl)methane, di-(4-aminocyclohexyl)methane; 2,2-di-(4-aminophenyl)propane, 2,2-di-(4-aminocyclohexyl)propane, among others. Copolymers of caprolactam with diacids and diamines are also useful.

Polyethers include polyethersulfones, polyetherketones, polyetheretherketones, and polyetherimides. These polymers may be prepared by the reaction of salts of dihydroxyaromatic compounds, such as bisphenol A disodium salt, with dihaloaromatic molecules such as bis(4-fluorophenyl) sulfone, bis(4- chlorophenyl) sulfone, the analogous ketones and bis(halophenyl)bisimides or bis(nitrophenyl)bisimides as illustrated by 1,3-bis[N-(4- chlorophthalimido)]benzene.

In a multi-layer article, the first thermoplastic resin layer and the second thermoplastic resin layer may comprise the same or different thermoplastic resin. It may be desirable to match the melt viscosity of the thermoplastic resin used in the second layer with the melt viscosity of the thermoplastic resin used in the first layer during the formation of the multi-layer sheet. The melt viscosity of the thermoplastic resin in the first layer may be within about 20%, about 10%, or even about 5% of the melt viscosity of the thermoplastic resin in the second layer. It may be desirable for the melt viscosity of the thermoplastic resin used in the first layer to be substantially equal to the melt viscosity of the thermoplastic resin used in the second layer, at the point of initial contact of the two melts during the formation of the multi-layer sheet. By substantially equal, it is meant that the melt viscosity of the thermoplastic resin used in the first layer is within about 1% of the melt viscosity of the thermoplastic resin used in the second layer, at the point of initial contact of the two melts during the formation of the multi-layer sheet.

In an article, the thermoplastic resin(s) may be employed in amounts of about 70 wt% to about 99.9 wt%, based upon the total weight of the article. Within this range, an amount of greater than or equal to about 75 wt%, preferably greater than or equal to about 80 wt%, and more preferably greater than or equal to about 85 wt% may be used, based upon the total weight of the article. Also desirable within this range, is an amount of less than or equal to about 98 wt%, preferably less than or equal to about 97 wt%, and more preferably less than or equal to about 95 wt% may be used, based upon the total weight of the article.

In a multi-layer article, the thermoplastic resin(s) in the first layer may be employed in amounts of about 70 wt% to about 99.9 wt%, based upon the total weight of the first layer. Within this range, an amount of greater than or equal to about 75 wt%, preferably greater than or equal to about 80 wt%, and more preferably greater than or equal to about 85 wt% may be used, based upon the total weight of the first layer. Also desirable within this range, is an amount of less than or equal to about 98 wt%, preferably less than or equal to about 97 wt%, and more preferably less than or equal to about 95 wt% may be used, based upon the total weight of the first layer. In addition, the thermoplastic resins in the second layer may be employed in amounts of about 70 wt% to about 100 wt%, based upon the total weight of the second layer. Within this range, an amount of greater than or equal to about 75 wt%, preferably greater than or equal to about 80 wt%, and more preferably greater than or equal to about 85 wt% may be used, based upon the total weight of the second layer. Also desirable within this range, is an amount of less than or equal to about 98 wt%, preferably less than or equal to about 97 wt%, and more preferably less than or equal to about 95 wt% may be used, based upon the total weight of the second layer.

The biocidal layers and articles may optionally comprise effective amounts of optional additive such as, for example, anti-oxidants, flame retardants, drip retardants, dyes, pigments, colorants, UV stabilizers, heat stabilizers, small particle mineral such as clay, mica, and talc, antistatic agents, plasticizers, lubricants, and combinations comprising one or more of the foregoing additives. Also IR heat shielding additives may be employed, for example if the article is a transparent article used as an enclosure. A suitable IR heat shielding additive is lanthanum hexaboride. These additives are known in the art, as are their effective levels and methods of incorporation. Effective amounts of the additives vary widely, but they are usually present in an amount of less than or equal to about 50% or more by weight, based on the weight of the biocidal articles and/or layers.

Suitable UV absorbers are benzophenones such as 2,4 dihydroxybenzophenone, 2-hydroxy-4-methoxybenzophenone, 2-hydroxy-4-n-octoxybenzophenone, 4-dodecyloxy-2 hydroxybenzophenone, 2-hydroxy-4-octadecyloxybenzophenone, 2,2' dihydroxy- 4 methoxybenzophenone, 2,2' dihydroxy-4,4'dimethoxybenzophenone, 2,2' dihydroxy-4 methoxybenzophenone, 2,2', 4,4' tetra hydroxybenzophenone, 2-hydroxy-4-methoxy-5 sulfobenzophenone, 2-hydroxy-4-methoxy-2'-carboxybenzophenone, 2,2'dihydroxy-4,4'dimethoxy-5 sulfobenzophenone, 2-hydroxy-4-(2-hydroxy-3-methylaryloxy) propoxybenzophenone, 2-hydroxy-4 chlorobenzopheone, or the like; benzotriazoles such as 2,2'-(hydroxy-5-methyl phenyl) benzotriazole, 2,2'-(hydroxy-3',5'-ditert-butyl phenyl) benzotriazole, and 2,2'-(hydroxy-X-tert, butyl-5'-methylphenyl) benzotriazole, and the like; salicylates such as phenyl salicylate, carboxyphenyl salicylate, p-octylphenyl salicylate, strontium salicylate, p-tert butylphenyl salicylate, methyl salicylate, dodecyl salicylate, and the like; and also other ultraviolet absorbents such as resorcinol monobenzoate, 2'ethyl hexyl-2-cyano, 3-phenylcinnamate, 2- ethyl-hexyl-2-cyano-3,3-diphenyl acrylate, ethyl-2-cyano-3,3-diphenyl acrylate, [2-2'-thiobis(4-t-octylphenolate)-1-n-butylamine, and the like, and combinations comprising one or more of the foregoing UV absorbers. A preferred UV absorber for extruded polycarbonate compositions is UVINUL 3030, commercially available from BASF.

The UV absorbers are generally used in amounts of about 5 wt% to about 15 wt%, based upon the weight of the article or first layer of a multi-layer article. The UV absorber may preferably be used in an amount of about 7 wt% to about 14 wt%, based on the total weight of the article or first layer of a multi-layer article. More preferably, the UV absorber may be used in an amount of about 8 wt% to about 12 wt%, based on the total weight of the article or first layer of a multi-layer article. Most preferably, the UV absorber may be used in an amount of about 9 wt% to about 11 wt%, based on the total weight of the article or first layer of a multi-layer article. For the second and any subsequent layers of a multi-layer article, i.e. the core layer, UV stabilizers are may be employed in an amount of about 0.05 wt% to about 2 wt%, preferably about 0.1 wt% to about 0.5 wt%, and most preferably about 0.2 wt% to about 0.4 wt%.

An article or multi-layer article may be made by extrusion, co-extrusion, casting, coating, vacuum deposition, lamination, milling, calender, molding, and combinations thereof. Within extrusion and co-extrusion, various techniques may be employed. For example, two or more layers of the multi-layer article may be extruded from separate extruders through separate sheet dies into contact with one another when hot, and then passed through a single sheet of rollers. Alternatively, compositions for formation of the various layers, may be brought together and into contact with one another through a co-extrusion adapter/feedblock and then through a single or multi-manifold die. The adapter /feedblock is constructed such that the melts forming the separate layers are deposited as adherent layers on the melt of the center layer. After co-extrusion, the multilayer length of the melt produced can be formed into desired shapes, solid sheets, etc., in an extrusion die connected downstream.

The desired composition for the first layer and the second layer may be separately precompounded prior to extrusion, co-extrusion, molding etc. In the case of co-extrusion of a multi-layer article, precompounded materials may be first melt blended in a twin screw extruder, single screw extruder, Buss kneader, roll mill, or the like, prior to being formed into a suitable shapes such as pellets, sheets, and the like, for further co-extrusion. The precompounded first and second layer compositions may then be fed into the respective extruders for co-extrusion.

Alternatively, in the extrusion of the first layer and the second layer, the additives (e.g., inorganic biocidal agent) may be added to the extruder along with the thermoplastic resin at the feed throat. In another alternative, in the extrusion of the first layer and the second layer, the additives may be added to the extruder in the form of a masterbatch. While the thermoplastic resin is fed to the throat of the extruder, the masterbatch may be fed either at the throat of the extruder downstream of the throat. In the production of the second layer, the thermoplastic resin may be fed to the throat of a single screw extruder. In the production of the first or cap layer, the thermoplastic resin fed to the throat of a single or twin screw extruder while the inorganic biocidal agent is added in masterbatch form downstream of the feed throat. Co-extrusion of the layers by single screw extruders may be employed for the manufacturing of the multi-layered sheet.

An article may be formed by a suitable means and then texturized by mechanically or chemically abrading the exterior surface of the article. A suitable abrasion technique is rubbing the surface of the article with a rough tissue or other rubbing means suitable to produce a textured surface.

In order to form an extruded textured sheet or multi-layer textured sheet, calendering may be done with a pair of rolls generally lying in a horizontal plane consisting of top roll and a bottom roll. The top roll imparts a textured surface to the upper surface of the article. The bottom roll may impart an untextured or a textured surface to the lower surface of the article by employing a polished or standard chrome plated surface roll or a textured roll, respectively. In order to impart a textured surface on the first layer, the top and optionally the bottom roll have surface discontinuities or protrusions. Preferably, the protrusions have a length ($R_a$) of about 200 nm to about 20 microns, preferably about 0.5 microns to about 10 microns as measured with a profileometer.

Once extruded, a sheet, multi-layered sheet, textured sheet, or textured multi-layer sheet may be molded, i.e., blow molded, vacuum molded, injection molded, into its final shape. It is preferred that molding is done in a mold having surface discontinuities or protrusions that impart a textured surface on the exterior surface of the article or multi-layer article. Preferably, the protrusions have a length ($R_a$) of about 50 nm to about 20 microns, preferably about 0.5 microns to about 10 microns.

The multi-layer article in the form of a sheet or a film, for example, can be further processed various ways such as, for example, thermoforming into a shaped article. Thermoforming comprises simultaneously heating and forming the article or multi-layer article, e.g., an extruded sheet, into the desired shape such as in a mold. Either vacuum or pressure against the mold may be used to form the article or multi-layer article. Once the desired shape has been

obtained, the shaped article is cooled below its thermoplastic temperature and removed from the mold. It has unexpectedly been found that thermoforming the articles may improve the biocidal efficacy of the articles.

The textured articles and multi-layer articles are effective in reducing the growth of pathogenic organisms such as, for example, viruses, bacteria, fungi and yeast including, for example, *Bacillus cereus, Escherichia coli, Pseudomonas aeruginosa, Staphylococcus aureus, Streptococcus feacalis, Salmonella gallinarum, Vibrio parahaemdyticus, Candida albicans, Streptococcus mutans, Legionella pneumophila,* Fuso bacterium, *Aspergillus niger, Aureobasidium pullulans, Cheatomium globosum, Gliocladium virens, Pencillum funiculosum, Saccharomyces cerevisiae,* Herpes simplex viruses, polio viruses, hepatitis B and C viruses, influenza virus, sendai viruses, sindbis viruses, vaccinia viruses, severe acute respiratory syndrome (SARS) virus, and combinations comprising one or more of the foregoing organisms.

The articles and multi-layer articles thus produced may be used in transportation, hospital, food contact, and appliance applications, for example. Sheets may be used, for example, in aircraft wall panels, train wall panels, laboratory furniture, hospital beds, aircraft seats, bus wall panels, bus seats, train seats, and touch screens, and the like. Films may be used, for example, in keyboards, mobile phones, touch screens, and the like. The articles and multi-layer articles may be in the form of sheets, films and multi-wall sheets, for example. Sheets may be used as roofing or glazing materials, particularly after being co-extruded as multi-wall sheets with air channels in between the walls. The individual single or multi-layer sheets of the multi-wall sheet may be separated by brackets and have air pockets in between the brackets. The brackets may also be made of a thermoplastic polymer such as those described above, for example, polycarbonate, polyester, or polyestercarbonate-polyester.

The invention is further illustrated by the following non-limiting examples.

EXAMPLE 1

A first thermoplastic layer or cap layer comprising polycarbonate and biocidal zeolite in an amount shown in Table 1 was formed on a second layer also comprising polycarbonate. The thickness of the first layer was 100 μm, and the thickness of the second layer was 1.2 mm. Agion AJ80H is a zeolite comprising about 2.5 wt% silver, Agion X2 is a silver zeolite comprising about 1.8 wt% silver, and Antimicrobial Sarpu is biocidal silver nanoparticles. In some cases, masking was used in the preparation of the sheet. By masking, it is meant that during extrusion, a protective layer was placed on the film to prevent scratches during handling. The masking was removed prior to measuring the properties of the layers.

Table 1: Composition of cap-layer sheet

| Sheet | Biocidal Zeolite | Masking on the sheet |
|---|---|---|
| | Biocidal Agion AJ80H | |
| A* | 0 wt% | No |
| B | 2 wt% | No |
| C | 5 wt% | No |
| D* | 0 wt% | Yes |
| E | 2 wt% | Yes |
| F | 5 wt% | Yes |
| | Biocidal Agion X2 | |
| G* | 0 wt% | No |
| H | 2 wt% | No |
| I | 5 wt% | No |
| | Biocidal Sarpu | |
| J* | 1500 ppm | No |
| * Comparative example | | |

The experimental results for the sheets with a cap-layer of composition given in Table 1 can be found in Table 2. Light transmission and haze were measured according to ASTM D 1003, while the lab color was measured according to CIE lab DIN 5033.

Silver release was measured as the amount of silver released from the surface of an about 2 inch by about 2 inch sample (about 0.05 meter by about 0.05 meter) using a graphite furnace atomic absorption spectrophotometer. The exterior surface of the sample to be tested was soaked in a sodium nitrate solution (40 mL of 0.8% sodium nitrate) for 24 hours at room temperature to form a test solution. The test solution was then analyzed to measure the amount of silver ion in the test solution and thus the exposure of the inorganic biocidal agent at the surface of the article.

Biocidal efficacy was measure by one of two protocols. In the first protocol, a 50 mm by 50 mm article was contacted with 0.1 to 0.2 mL of a culture of *Staphlococcus aureus* having a concentration of about $1.3X10^6$ to about $1.4X10^6$ CFU/ml. The culture was covered with a film or a glass slide to minimize evaporation. The samples were incubated at 37°C and greater than 90% relative humidity for about 24 hours. Viable organisms were recovered by washing with a neutralizing fluid and serially diluting the culture onto Tryptone Soya Agar plates. The plates were incubated for 48 hours at 27°C and the number of colonies were counted. This protocol was used for the Biocidal Sarpu and Iraguard B6000, B7000, and B5021 additives.

In a second protocol, the biocidal article was contacted with a culture of *E. coli* having a concentration of about $1X10^5$. The culture was covered with a film or a glass slide to minimize evaporation. The samples were incubated at 37°C for about 24 hours.

Anti-microbial efficacy was measured similarly to that in the first protocol. This protocol was used for the Biocidal Agion AJ80H, Agion X2 and Agion AK additives.

Flex plate impact was measured according to ISO 6603. As such means that the surface of the cap layer was not texturized. Light friction means that the surface of the cap layer was polished with a cloth to remove the thin film that is formed on the surface of the cap layer and thus form a textured surface.

Table 2: Color, Impact, Silver release and Biocidal Efficacy for Two-Layer sheets

| Sheet | LT % | YI | Impact | Silver release, ppb | | Biocidal efficacy |
|---|---|---|---|---|---|---|
| | | | | As such | Textured** | Textured** |
| A* | 90.2 | <2 | Ductile | 0 | 0 | 0% |
| B | 86.8 | <2 | Ductile | 7 | 20 | 99.99% |
| C | 84.5 | <2 | Ductile | 5 | 58 | 99.99% |
| D* | 90.2 | <2 | Ductile | 0 | 0 | 0% |
| E | 86.8 | <2 | Ductile | 2 | 35 | 99.99% |
| F | 84.5 | <2 | Ductile | 4 | 82 | 99.99% |
| | | | | As such | | As such |
| G* | 90.1 | <2 | Ductile | 0 | | 0% |
| H | | <2 | Ductile | 0 | | 0% |
| I | | <2 | Ductile | 7.2 | | 19.58% |
| J* | 85.7 | 12 | Brittle | - | | >99.9% |

*Comparative example
**The surface roughness of the "as such" and "textured" surface for Example A were measured twice with an atomic force microscopy (AFM). The measurements were done in tapping mode over a surface area of 50 by 50 microns. The average roughness ($R_a$) defined as: Arithmetic average of the absolute values of the height variations measured from the mean plane was: "as such": Ra = 15.7 nm and "textured": Ra 203.5 nm. While there was some variability in the measured surface roughness depending on the amount of inorganic biocidal agent in the sample, overall the textured articles had roughly a 10-fold greater average roughness than the as is samples.

For sample B, the silver release factor of the as such sample was 1.75, and of the textured sample was 5. For sample C, the silver release factor of the as such sample was 0.5, and of the textured sample was 5.8. For sample E, the silver release factor of the as such sample was 0.5, and of the textured sample was 8.75. For sample F, the silver release factor of the as such sample was 0.4, and of the textured sample was 8.2.

Several conclusions can be drawn from the results in Table 2. First, polycarbonate comprising zeolites with ionic silver (Examples B, C, E, F, H and I) show very good optical and mechanical properties, whereas direct addition

of ionic silver (Example J, as described in WO 00/25726) results in poor mechanical properties (brittle failure) and loss in optical performance (YI = 12). Second, the silver release is improved when the surface of the cap layers is texturized with light friction. For example, in Example B, the silver release is 7 ppb as is and increases to 20 ppb with the application of light friction. Third, the biocidal efficacy approaches 100% with light friction (Examples B, C, E, and F), compared to 0% and 19.58% (H and I) for a non-texturized cap layer. Comparing example J to Examples B, C, E, F, H and I, the biocidal composition J comprising silver nanoparticles has poorer physical properties than the other compositions which comprise silver zeolites.

EXAMPLE 2

The biocidal zeolite composition of single layer molded plaques of thickness 3.2 microns are given in Table 3. Agion AK is a silver zeolite comprising 5 wt% silver.
Iraguard B6000, B7000, and B5021 are silver/zinc zeolites with various concentrations of silver and zinc.

Table 3: Composition of injection molded articles

| Article | Inorganic Biocidal Agent | |
|---|---|---|
| | Agion AJ80H | Irgaguard B6000 |
| K* | 0 wt% | |
| L | 0.5 wt% | |
| M | 1.0 wt% | |
| P | | 0.3 wt% |
| Q | | 0.5 wt% |
| R | | 1.0 wt% |
| * Comparative example | | |

The results for the plastic injection molded articles can be found in Table 4. In Table 4, low biocidal efficacy corresponds to less than about 15% killing of the microbial culture, and medium biocidal efficacy corresponds to greater than 15 % to less than about 60 % killing of the microbial culture.

Table 4: Results for injection molded articles

| Article | LT% | YI | Haze | Silver release, ppb | Biocidal efficacy |
|---|---|---|---|---|---|
| K* | 91 | <2 | 0.5 | | Low |
| L | 78 | 8.5 | 99 | | Medium |
| M | 59 | 18.5 | 100 | | Medium |
| P | 84.7 | 5.3 | 62.6 | | Medium |
| Q | 82.3 | 6.5 | 85.1 | | Medium |
| R | 79.8 | 9.7 | 97.5 | | Medium |
| * Comparative example | | | | | |

As can been seen from Table 4, the desired combination of biocidal properties as well as little impairment of the optical properties may be achieved with a multi-layer structure wherein the first layer comprises an inorganic anti-microbial agent.

EXAMPLE 3

The biocidal zeolite composition of single layer molded plaques of thickness 3.2 microns are given in Table 5. Iraguard B7000, and B5021 are silver/zinc zeolites with various concentrations of silver and zinc.

Table 5: Composition of injection molded articles

| Article | Inorganic biocidal agent | |
|---|---|---|
| | Irgaguard B7000 | Irgaguard B5021 |
| S | 0.3 wt% | |
| T | 0.5 wt% | |
| U | 1.0 wt% | |
| V | | 0.3 wt% |
| W | | 0.5 wt% |
| X | | 1.0 wt% |

One side of the plaques was abrasive belt ground (grain size 80, 40m/sec) and corresponds in Table 6 to the rough side. Samples S-X were tested against *Staphylococcus aureus* ATCC 6538. A 38mm x 50mm sample was inoculated with 0.15 ml of microorganism culture and covered with film to help prevent evaporation. The samples were then incubated at 37°C and greater than 90% relative humidity for 24 hours. Viable organisms were recovered by washing off with neutralizing fluid and serially diluting onto Tryptone Soya Agar plates being incubated for 48 hours at 37°C. In Table 6, low biocidal efficacy corresponds to less than about 15% killing of the microbial culture, and high biocidal efficacy corresponds to less than about 60 % killing of the microbial culture.

Table 6: Results for injection molded articles

| Article | LT % | YI | Haz e | 0 hours Initial | after 24 hours | Log reductio n | Biocidal efficacy |
|---|---|---|---|---|---|---|---|
| S*, as such | 83.3 | 6.4 | 76.9 | | 6.1 x $10^5$ | 1.2 | Low |
| S, textured | | | | | **1.6 x $10^3$** | **2.7** | **High** |
| T*, as such | 81.6 | 7.8 | 83.8 | | 5.9 x $10^5$ | 1.2 | Low |
| T, textured | | | | | **2.6 x $10^3$** | **2.5** | **High** |
| U*, as such | 79.4 | 10.0 | 96.5 | | 5.1 x $10^4$ | 1.2 | Low |
| U, textured | | | | | **1.0 x $10^3$** | **2.9** | **High** |
| V*, smooth | 50.2 | 31.2 | 90.9 | | 9.0 x $10^4$ | 1.0 | Low |
| V, textured | | | | | **1.2 x $10^3$** | **2.9** | **High** |
| W*, as such | 44 | 34.6 | 98.1 | | 6.1 x $10^4$ | 1.2 | Low |
| W, textured | | | | | 1.0 x $10^2$ | 3.9 | High |
| X, * as such | 35.3 | 48.9 | 99.6 | | 1.5 x $10^3$ | 2.8 | High |
| X, textured | | | | | **1.3 x $10^2$** | **3.8** | **High** |
| * Comparative example | | | | | | | |

As can been seen from Table 6, the desired combination of biocidal properties as well as little impairment of the optical properties may be achieved with a textured article comprising an inorganic biocidal agent. While the untreated sample all have low biocidal efficacy, roughening of the same sample by abrasion imparts high biocidal efficacy to the articles.

EXAMPLE 4

Thermoforming was also done on Composition B from a previous set of samples. The results for a thermoformed composition are shown in Table 7.

Table 7: Results for thermoformed articles

| Article | | Silver release, ppb |
|---|---|---|
| | | |
| B | Initial | 7.4 |
| After thermoforming | | |
| B | Edge | 6.9 |
| B | Middle | 24 |
| B | Side | 20 |

As shown in Table 7, thermoforming a biocidal article improves the silver release and thus the biocidal activity. The silver release is more improved in the middle and side than at the edges. In addition to the above transparent sheets, opaque materials were evaluated giving similar results (data not shown).

EXAMPLE 5

Table 8 shows a comparison of the properties of a single layer article compared to those for a two-layer article. In this example, samples were not treated with light friction. Table 8: Composition of cap layer of a three-layer multi-layer layer article and a single layer article

| Film | Biocidal zeolite | Masking on the film | Cap-layer thickness |
|---|---|---|---|
| **Composition of cap-layer in two-layer article** | | | |
| | Biocidal Agion X2 | | |
| AA* | 0 wt% | No | 32.microns |
| BB | 2 wt% | No | 32 microns |
| CC | 5 wt% | No | 16 microns |
| **Composition of single layer article** | | | |
| | Biocidal Agion X2 | | |
| DD* | 0 wt% | No | |
| EE | 2 wt% | No | |
| FF | 5 wt% | No | |
| *Comparative example | | | |

The experimental results for the single layer article and the three-layer article are given in Table 9.

Table 9: Results for three-laver article compared to a single laver article

| Film | LT % | YI | Haze | Silver release | Biocidal efficacy |
|---|---|---|---|---|---|
| | | | | As such | As such |
| AA* | 91.3 | 0.76 | <10 | 0 | Low |
| BB | 91.0 | 0.34 | <10 | 18 | Medium |
| CC | 90.9 | 0.42 | <10 | 82 | High |
| DD* | 91.3 | 0.76 | <10 | 0 | Low |
| EE | 90.5 | -1.03 | 22.4 | 10 | Medium |

(continued)

| Film | LT % | YI | Haze | Silver release | Biocidal efficacy |
|---|---|---|---|---|---|
| FF | 89.2 | -2.56 | 47.4 | 38 | Medium |
| *Comparative example | | | | | |

As can been seen from Table 9, the desired combination of good biocidal activity and a small influence on optical properties may be achieved by the use of a multi-layered approach.

An article or multi-layered article comprising an exterior surface comprising an inorganic biocidal agent can provide a good combination of biocidal activity and physical properties. The biocidal activity of either an article or multi-layer article can be enhanced by texturizing the exterior surface of the article or layer comprising the biocidal inorganic agent. The textured articles can have anti-microbial efficiencies of up to about 99.9% killing of a microbial culture, and silver release of up to about 80 ppb or greater. The textured surface can be formed by mechanically or chemically abrading an article, or by texturing the article using a roller or mold. All of these treatments can disrupt the thin film on the surface of the article during processing, resulting in improved biocidal activity. An advantage is that suitable biocidal activity may be achieved at lower inorganic biocidal agent levels which can lead to improved biocidal properties in the articles.

The desired amount of biocidal activity may also be achieved by thermoforming an article or multi-layer article to form a shaped article. As with texturizing, thermoforming disrupts the layer on the surface of the article allowing improved silver release and thus improved anti-microbial activity.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the appended claims.

All cited patents, patent applications, and other references are incorporated herein by reference in their entirety.

## Claims

1. An article comprising a thermoplastic composition comprising a thermoplastic resin and an inorganic biocidal agent, wherein the thermoplastic resin comprises a homopolymer or a copolymer of a polycarbonate, a polyester, a polyacrylate, a polyamide, a polyetherimide, a polyphenylene ether, or a combination comprising one or more of the foregoing resins,
   wherein the article has a biocidal metal release factor of greater than 2.5 from an exterior surface,
   wherein biocidal metal release in parts per billion is measured by contacting 5 cm by 5 cm of the exterior surface with 40 milliliters of 0.8% weight/volume of sodium nitrate for 24 hours at 25° C to form a test solution, and measuring an amount of biocidal metal in the test solution in parts per billion, and
   wherein the biocidal metal release factor is the amount of biocidal metal in the test solution in parts per billion divided by a product of a weight percent of the inorganic biocidal agent based on the total weight of the article and the weight percent of biocidal metal in the inorganic biocidal agent.

2. The article of Claim 1, wherein the biocidal metal release factor is greater than or equal to about 3.

3. The article of Claim 1, comprising a textured exterior surface over at least a portion thereof, wherein the textured exterior surface comprises the thermoplastic resin and the biocidal inorganic agent.

4. The article of Claim 1, wherein the inorganic biocidal agent is a biocidal zeolite.

5. The article of Claim 1, wherein the exterior surface is in the form of a layer disposed over at least a portion of the article.

6. An article comprising a textured exterior surface covering at least a portion thereof, wherein the textured exterior surface comprises an inorganic biocidal agent and a first thermoplastic resin.

7. The article of Claim 6, wherein the first thermoplastic resin, is a homopolymer or a copolymer of a polycarbonate,

a polyester, a polyacrylate, a polyamide, a polyetherimide, a polyphenylene ether, or a combination comprising one or more of the foregoing resins.

**8.** The article of Claim 6, wherein the texturing is effective to produce biocidal activity.

**9.** The article of Claim 6, wherein texturing is effective to kill at least 50% of a pathogenic organism in contact with the exterior surface over a period of 24 hours at 25°C.

**10.** The article of Claim 6, wherein the textured exterior surface is in the form of a layer disposed on at least a portion of the article.

**11.** The article of Claim 10, wherein at least a portion of the article other than the textured exterior surface comprises a second thermoplastic resin that is the same as or different than the first thermoplastic resin.

**12.** The article of Claim 11, wherein at least a portion of the article other than the textured exterior surface comprises an inorganic biocidal agent that is the same as or different than the inorganic biocidal agent in the textured exterior surface.

**13.** The article of Claim 8, wherein the biocidal activity is an anti-microbial efficacy that is greater than or equal to about 70% killing of an E. coli culture or a Staphlococcus aureus culture, measured by contacting the exterior textured surface of the article with the E. coli culture or the Staphlococcus aureus culture, incubating the article for 24 hours at 37°C, and determining the percentage of killing of the E. coli culture or the Staphlococcus aureus culture.

**14.** The article of Claim 6, wherein the inorganic biocidal agent comprises a biocidal metal comprising silver, gold, copper, zinc, mercury, tin, lead, bismuth, cadmium, chromium, thallium, or a combination comprising one or more of the foregoing biocidal metals.

**15.** The article of Claim 14, wherein the inorganic biocidal agent is in the form of a metal salt, a hydroxyapatite, a zirconium phosphate, or a zeolite comprising at least one of the biocidal metals, or a combination comprising one or more of the foregoing forms.

**16.** The article of Claim 10, wherein the textured exterior surface layer has a thickness of about 5 micrometers to about 150 micrometers.

**17.** The article of Claim 6, in the form of a film, a sheet, or a multi-wall sheet.

**18.** The article of Claim 6, wherein the texturing is provided by chemical or mechanical abrasion of at least a portion of the outer surface.

**19.** The article of Claim 6, wherein the article reduces the growth of a pathogenic organism comprising Bacillus cereus, Escherchia coli, Pseudomonas aeruginosa, Staphylococcus aureus, Streptococcus feacalis, Salmonella gallinarum, Vibrio parahaemdyticus, Candida albicans, Streptococcus mutans, Legionella pneumophila, Fuso bacterium, Aspergillus niger, Aureobasidium pullulans, Cheatomium globosum, Gliocladium virens, Pencillum funiculosum, Saccharomyces cerevisiae, a Herpes simplex virus, a polio viruses, a hepatitis B virus, a hepatitis C virus, an influenza virus, a sendai virus, a sindbis virus, a vaccinia virus, a severe acute respiratory syndrome virus, or a combination comprising one or more of the foregoing organisms.

**20.** A method of making a textured article, comprising chemically or mechanically abrading an exterior surface of an article to form a textured exterior surface, wherein the exterior surface comprises an inorganic biocidal agent and a first thermoplastic resin, and wherein abrading results in an improvement in biocidal activity in the textured article compared to an untextured article.

**21.** A method of making a textured article, comprising calendering an article to provide a textured exterior surface over at least a portion of the article, wherein the surface of a roller in contact with the exterior surface of the article comprises surface discontinuities, and wherein the textured exterior surface of the article comprises an inorganic biocidal agent and a first thermoplastic resin.

**22.** A method of making a textured article, comprising

molding an article to provide a textured exterior surface over at least a portion of the article, wherein the surface of a mold in contact with the exterior surface of the article comprises surface discontinuities, and wherein the textured exterior surface of the artic le comprises an inorganic biocidal agent and a first thermoplastic resin.

**Patentansprüche**

1. Ein Gegenstand umfassend eine thermoplastische Zusammensetzung aufweisend ein thermoplastisches Harz und ein anorganisches biozides Mittel,
wobei das thermoplastische Harz ein Homopolymer oder ein Copolymer umfasst eines Polycarbonats, eines Polyesters, eines Polyacrylats, eines Polyamids, eines Polyetherimids, eines Polyphenylenethers oder einer Kombination aufweisend ein oder mehrere der vorstehenden Harze,
wobei der Gegenstand einen bioziden Metallfreisetzungsfaktor von größer als 2,5 von einer äußeren Oberfläche hat, wobei die biozide Metallfreisetzung in Teilen pro Milliarde gemessen wird indem man 5 cm mal 5 cm der äußeren Oberfläche mit 40 Millilitern 0,8 %-igem (Gewicht/ Volumen) Natriumnitrat für 24 Stunden bei 25 °C zur Bildung einer Testlösung kontaktiert, und einen Gehalt an biozidem Metall in der Testlösung in Teilen pro Milliarde misst, und wobei der biozide Metallfreisetzungsfaktor der Gehalt an biozidem Metall in der Testlösung in Teilen pro Milliarde ist geteilt durch ein Produkt aus Gewichtsprozenten des anorganischen bioziden Mittels bezogen auf das Gesamtgewicht des Gegenstands und den Gewichtsprozenten des bioziden Metalls im anorganischen bioziden Mittel.

2. Gegenstand nach Anspruch 1, wobei der biozide Metallfreisetzungsfaktor größer als oder gleich 3 ist.

3. Gegenstand nach Anspruch 1, aufweisend wenigsten einen Abschnitt mit einer strukturierten äußeren Oberfläche, wobei die strukturierte äußere Oberfläche das thermoplastische Harze und das biozide anorganische Mittel aufweist.

4. Gegenstand nach Anspruch 1, wobei das anorganische biozide Mittel ein biozides Zeolith ist.

5. Gegenstand nach Anspruch 1, wobei die äußere Oberfläche die Form einer Schicht hat, die über wenigstens einem Abschnitt des Gegenstands angeordnet ist.

6. Gegenstand aufweisend eine strukturierte äußere Oberfläche, die wenigstens einen Abschnitt davon bedeckt, wobei die strukturierte äußere Oberfläche ein anorganisches biozides Mittel und ein erstes thermoplastisches Harz aufweist.

7. Gegenstand nach Anspruch 6, wobei das erste thermoplastische Harz ein Homopolymer oder ein Copolymer eines Polycarbonats, eines Polyesters, eines Polyacrylats, eines Polyamids, eines Polyetherimids, eines Polyphenylenethers oder einer Kombination davon ist, die eines oder mehrere der vorstehenden Harze aufweist.

8. Gegenstand nach Anspruch 6, wobei die Struktur biozide Wirksamkeit erzeugt.

9. Gegenstand nach Anspruch 6, wobei die Strukturierung wirksam wenigstens 50 % eines pathogenen Organismus abtötet, der sich mit der äußeren Oberfläche über einen Zeitraum von 24 Stunden bei 25 °C in Kontakt befindet.

10. Gegenstand nach Anspruch 6, wobei die strukturierte äußere Oberfläche die Form einer Schicht hat, angeordnet auf wenigstens einem Abschnitt des Gegenstands.

11. Gegenstand nach Anspruch 10, wobei wenigstens ein anderer Abschnitt des Gegenstands als die strukturierte äußere Oberfläche ein zweites thermoplastisches Harz aufweist, dass gleiche oder verschieden vom ersten thermoplastischen Harz ist.

12. Gegenstand nach Anspruch 11, wobei wenigstens ein anderer Abschnitt des Gegenstands als die strukturierte äußere Oberfläche ein anorganisches biozides Mittel aufweist, dass gleich oder verschieden vom anorganischen bioziden Mittel in der strukturierten äußeren Oberfläche sein kann.

13. Gegenstand nach Anspruch 8, wobei biozide Aktivität eine anti-mikrobielle Wirksamkeit ist, die größer als oder gleich ist zu etwa 70 % Abtötung einer E. Coli-Kultur oder ein Staphyloccus-Aureus-Kultur, gemessen durch Kontaktieren der äußeren strukturierten Oberfläche des Gegenstandes mit der E. Coli-Kultur oder der Staphyloccus-Aureus-Kultur, Inkubieren des Gegenstands für 24 Stunden bei 37 °C und Bestimmen des Prozentsatzes an Abtötung

der E. Coli-Kultur oder der Staphyloccus-Aureus-Kultur.

14. Gegenstand nach Anspruch 6, wobei das anorganische biozide Mittel ein biozides Metall umfasst, aufweisend Silber, Gold, Kupfer, Zink, Quecksilber, Zinn, Blei, Wismut, Cadmium, Chrom, Thallium oder eine Kombination aufweisend eines oder mehrere der vorstehenden bioziden Metalle.

15. Gegenstand nach Anspruch 14, wobei das anorganische biozide Mittel in Form eines Metallsalzes, eines Hydroxyapatits, eines Zirkoniumphosphats, oder eines Zeoliths vorliegt, aufweisend wenigstens eines der bioziden Metalle oder einer Kombination umfassend eine oder mehrere der vorstehenden Formen.

16. Gegenstand nach Anspruch 10, wobei die strukturierte äußere Oberflächenschicht eine Dicke von etwa 5 Mikrometern bis etwa 150 Mikrometern hat.

17. Gegenstand nach Anspruch 6 in Form einer Folie, eines Blattes oder einer mehrwandigen Platte.

18. Gegenstand nach Anspruch 6, wobei die Strukturierung durch chemische oder mechanische Abrasion wenigstens eines Abschnitts der äußeren Oberfläche geschaffen wird.

19. Gegenstand nach Anspruch 6, wobei der Gegenstand das Wachstum eines pathogenen Organismus reduziert, aufweisend Bacillus Cereus, Escherchia Coli, Pseudomonas Aeruginosa, Staphylococcus Aureus, Streptococcus Feacalis, Salmonella Gallinarum, Vibrio Parahaemdyticus, Candida Albicans, Streptococccus Mutans, Legionella Pneumophila, Fuso Bacterium, Aspergillus Niger, Aureobasidium Pullulans, Cheatomium Globosum, Gliocladium Virens, Pencillum funiculosum, Saccharomyces Cerevisiae, eines Herpes simplex Virus, ein Poliovirus, eines Hepatitis B Virus, eines Hepatitis C Virus, eines Influenzavirus, eines Sendaivirus, eines Sindbisvirus, einens Vacciniavirus , eines ernsthaften akuten respiratorischen Syndromvirus, oder einer Kombination aufweisenden eine oder mehrere der vorstehenden Organismen.

20. Verfahren zur Herstellung eines strukturierten Gegenstands, bei welchem man eine äußere Oberfläche eines Gegenstands chemisch oder mechanisch zur Bildung einer strukturierten äußeren Oberfläche abschleift, wobei die äußere Oberfläche ein anorganisches biozides Mittel aufweist und ein erstes thermoplastisches Harz, und wobei das Abschleifen in einer Verbesserung der bioziden Aktivität beim strukturierten Gegenstand resultiert verglichen mit einem nicht strukturierten Gegenstand.

21. Verfahren zur Herstellung eines strukturierten Gegenstands, bei welchem man einen Gegenstand zur Schaffung einer strukturierten äußeren Oberfläche über wenigstens einen Abschnitt des Gegenstands kalandriert, wobei die Oberfläche einer Walze, die in Kontakt mit der äußeren Oberfläche des Gegenstands ist, Oberflächendiskontunitäten umfasst, und wobei die strukturierte äußere Oberfläche des Gegenstandes ein anorganisches biozides Mittel und ein erstes thermoplastisches Harz aufweist.

22. Verfahren zur Herstellung eines strukturierten Gegenstands, bei welchem man
einen Gegenstand zur Schaffung einer strukturierten äußeren Oberfläche über wenigstens einen Abschnitt des Gegenstandes formt, wobei die Oberfläche einer Form, die in Kontakt mit der äußeren Oberfläche des Gegenstands ist, Oberflächendiskontinuitäten aufweist, und wobei die strukturierte äußere Oberfläche des Gegenstands ein anorgansiches biozides Mittel und ein erstes thermoplastisches Harz umfasst.

**Revendications**

1. Article comprenant une composition thermoplastique comprenant une résine thermoplastique et un agent biocide inorganique,
dans lequel la résine thermoplastique comprend un homopolymère ou un copolymère d'un polycarbonate, d'un polyester, d'un polyacrylate, d'un polyamide, d'un polyétherimide, d'un polyphénylène-éther ou une combinaison comprenant une ou plusieurs des résines précédentes,
l'article possédant un facteur de libération d'un métal biocide, à partir d'une surface extérieure, supérieur à 2,5,
dans lequel la libération d'un métal biocide, en parties par milliard, est mesurée par la mise en contact d'une zone de 5 cm sur 5 cm de la surface extérieure avec 40 millilitres de nitrate de sodium à 0,8% en poids/volume pendant 24 heures à 25°C pour former une solution d'essai, et la mesure de la quantité de métal biocide dans la solution d'essai en parties par milliard, et

dans lequel le facteur de libération d'un métal biocide est la quantité de métal biocide dans la solution d'essai, en parties par milliard, divisée par le produit du pourcentage en poids de l'agent biocide inorganique, rapporté au poids total de l'article, et du pourcentage en poids de métal biocide dans l'agent biocide inorganique.

**2.** Article conforme à la revendication 1, dans lequel le facteur de libération d'un métal biocide est supérieur ou égal à environ 3.

**3.** Article conforme à la revendication 1, comprenant une surface extérieure texturée sur au moins une partie, dans lequel la surface extérieure texturée comprend la résine thermoplastique et l'agent biocide inorganique.

**4.** Article conforme à la revendication 1, dans lequel l'agent biocide inorganique est une zéolite biocide.

**5.** Article conforme à la revendication 1, dans lequel la surface extérieure est sous la forme d'une couche placée sur au moins une partie de l'article.

**6.** Article comprenant une surface extérieure texturée recouvrant au moins une partie de l'article, dans lequel la surface extérieure texturée comprend un agent biocide inorganique et une première résine thermoplastique.

**7.** Article conforme à la revendication 6, dans lequel la première résine thermoplastique est un homopolymère ou un copolymère d'un polycarbonate, d'un polyester, d'un polyacrylate, d'un polyamide, d'un polyétherimide, d'un polyphénylène-éther, ou une combinaison comprenant une ou plusieurs des résines précédentes.

**8.** Article conforme à la revendication 6, dans lequel la texturation est efficace pour produire une activité biocide.

**9.** Article conforme à la revendication 6, dans lequel la texturation est efficace pour tuer au moins 50% d'un organisme pathogène en contact avec la surface extérieure sur une période de 24 heures à 25°C.

**10.** Article conforme à la revendication 6, dans lequel la surface extérieure texturée est sous la forme d'une couche placée sur au moins une partie de l'article.

**11.** Article conforme à la revendication 10, dans lequel au moins une partie de l'article autre que 1a surface extérieure texturée comprend une deuxième résine thermoplastique qui est identique à la première résine thermoplastique ou qui est différente.

**12.** Article conforme à la revendication 11, dans lequel au moins une partie de l'article autre que la surface extérieure texturée comprend un agent biocide inorganique qui est identique à l'agent biocide inorganique dans la surface extérieure texturée ou qui est différent.

**13.** Article conforme à la revendication 8, dans lequel l'activité biocide est une efficacité anti-microbienne qui est supérieure ou égale à environ 70% d'éradication d'une culture de E. coli ou d'une culture de Staphylococcus aureus, mesurée par la mise en contact de la surface extérieure texturée de l'article avec la culture de E. coli ou la culture de Staphylococcus aureus, l'incubation de l'article pendant 24 heures à 37°C, et la détermination du pourcentage d'éradication de la culture de E. coli ou de la culture de Staphylococcus aureus.

**14.** Article conforme à la revendication 6, dans lequel l'agent biocide inorganique comprend un métal biocide comprenant de l'argent, de l'or, du cuivre, du zinc, du mercure, de l'étain, du plomb, du bismuth, du cadmium, du chrome, du thallium, ou une combinaison comprenant un ou plusieurs des métaux biocides ci-dessus.

**15.** Article conforme à la revendication 14, dans lequel l'agent biocide inorganique est sous la forme d'un sel métallique, d'une hydroxyapatite, d'un phosphate de zirconium, ou d'une zéolite comprenant au moins un des métaux biocides, ou d'une combinaison comprenant une ou plusieurs des formes ci-dessus.

**16.** Article conforme à la revendication 10, dans lequel la couche de surface extérieure texturée a une épaisseur d'environ 5 micromètres à environ 150 micromètres.

**17.** Article conforme à la revendication 6, sous forme de film, de feuille ou de feuille à parois multiples.

**18.** Article conforme à la revendication 6, dans lequel la texturation est réalisée par abrasion chimique ou mécanique

d'au moins une partie de la surface externe.

**19.** Article conforme à la revendication 6, dans lequel l'article réduit la croissance d'un organisme pathogène comprenant Bacillus cereus, Escherichia coli, Pseudomonas aeruginosa, Staphylococcus aureus, Streptococcus faecalis, Salmonella gallinarum, Vibrio parahaemolyticus, Candida albicans, Streptococcus mutans, Legionella pneumophila, Fusobacterium, Aspergillus niger, Aureobasidium pullulans, Chaetomium globosum, Gliocladium virens, Penicillum funiculosum, Saccharomyces cerevisiae, l'Herpes simplex virus, le virus polio, le virus de l'hépatite B, le virus de l'hépatite C, le virus de la grippe, le virus Sendai, le virus Sindbis, le virus de la vaccine, le virus du syndrome respiratoire aigu sévère, ou une combinaison comprenant une ou plusieurs des organismes ci-dessus.

**20.** Procédé de fabrication d'un article texturé, comprenant l'abrasion chimique ou mécanique d'une surface extérieure d'un article pour former une surface extérieure texturée, dans lequel la surface extérieure comprend un agent biocide inorganique et une première résine thermoplastique, et
dans lequel l'abrasion se traduit par une amélioration de l'activité biocide dans l'article texturé par rapport à un article non texturé.

**21.** Procédé de fabrication d'un article texturé, comprenant
le calandrage d'un article pour obtenir une surface extérieure texturée sur au moins une partie de l'article, dans lequel la surface d'un rouleau en contact avec la surface extérieure de l'article comprend des discontinuités superficielles, et dans lequel la surface extérieure texturée de l'article comprend un agent biocide inorganique et une première résine thermoplastique.

**22.** Procédé de fabrication d'un article texturé, comprenant
le moulage d'un article pour obtenir une surface extérieure texturée sur au moins une partie de l'article, dans lequel la surface d'un moule en contact avec la surface extérieure de l'article comprend des discontinuités superficielles, et dans lequel la surface extérieure texturée de l'article comprend un agent biocide inorganique et une première résine thermoplastique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4775585 A
- US 4938958 A
- WO 0134686 A
- WO 0146900 A
- WO 0218003 A
- US 5003683 A
- US 5566699 A
- US 5009898 A
- US 5296238 A
- US 5441717 A
- US 5405644 A
- US 4217438 A
- US 2465319 A
- US 3047539 A
- US 2933480 A
- US 3093621 A
- US 3211709 A
- US 3646168 A
- US 3790519 A
- US 3884993 A
- US 3894999 A
- US 4059654 A
- US 4166055 A
- US 4584334 A
- US 5258455 A
- US 2071250 A
- US 2071251 A
- US 2130523 A
- US 2130948 A
- US 2241322 A
- US 2312966 A
- US 2512606 A
- WO 0025726 A